# EUROPEAN PATENT APPLICATION

(11) **EP 4 342 824 A1**
(43) Date of publication of application: **27.03.2024**
(21) Application number: 22880162.7
(22) Date of filing: 28.09.2022
(51) Int. Cl.: B65G 1/137, B65G 1/12, B65G 47/91

(54) **CONTAINER HANDLING DEVICE, WAREHOUSING SYSTEM, AND CONTAINER TAKING AND PLACING METHOD**

(30) Priority: 15.10.2021 CN 202111205928; 15.10.2021 CN 202122497170 U; 26.10.2021 CN 202111250978; 26.10.2021 CN 202122589107 U
(71) Applicant: Beijing Geekplus Technology Co., Ltd., Chaoyang District Beijing 100102 (CN)
(72) Inventor: LI, Hongbo, Beijing 100102 (CN); SUN, Qin, Beijing 100102 (CN); YAN, Jie, Beijing 100102 (CN)
(74) Representative: Manna, Sara
(86) International application number: PCT/CN2022/122129
(87) International publication number: WO 2023/061223

(57) **Abstract**

A container handling device, a warehousing system, and a container taking and placing method. The container handling device comprises at least two handling units, which are arranged in a horizontal X-axis direction in a spaced manner. Each handling unit comprises: a support assembly (81), which extends in a vertical Y-axis direction; and at least one container taking and conveying assembly, which is controlled by a driving assembly to move along the support assembly (81) in the Y-axis direction. Each container taking and conveying assembly comprises a taking and placing assembly (3) and a bearing assembly (2), wherein the taking and placing assembly (3) takes a container from and places same on a carrier. Each carrier is provided with at least two rows and at least two columns of container storage units, wherein one container storage unit comprises at least one storage position, and one storage position can accommodate at least one container. The at least two handling units are configured to handle containers on the same carrier. The container handling device takes and places containers by means of simultaneously operating the at least two handling units, such that the working efficiency is effectively improved.

## Description

### CROSS-REFERENCE TO RELATED APPLICATIONS

The present application claims priority to Chinese Patent Application No. 202111205928.X, filed with the China Patent Office on October 15, 2021 and entitled "CONTAINER TAKING AND CONVEYING ASSEMBLY, CONTAINER LOADING AND UNLOADING DEVICE, PICKING SYSTEM, AND CONTAINER TAKING AND CONVEYING METHOD", Chinese Patent Application No. 202122497170.3, filed with the China Patent Office on October 15, 2021 and entitled "CONTAINER TAKING AND CONVEYING ASSEMBLY, CONTAINER LOADING AND UNLOADING DEVICE, AND PICKING SYSTEM", Chinese Patent Application No. 202111250978.X, filed with the China Patent Office on October 26, 2021 and entitled "CONTAINER LOADING AND UNLOADING DEVICE, WAREHOUSING SYSTEM, AND CONTAINER TAKING AND PLACING METHOD", and Chinese Patent Application No. 202122589107.2, filed with the China Patent Office on October 26, 2021 and entitled "CONTAINER LOADING AND UNLOADING DEVICE, AND WAREHOUSING SYSTEM", each of which is incorporated herein by reference in their entireties.

### TECHNICAL FIELD

The present disclosure relates to the field of logistics and, more particularly, relates to a container loading and unloading device. The present disclosure further relates to a warehousing system including the container loading and unloading device and a container taking and placing method.

### BACKGROUND

Currently, automatic warehousing systems have been increasingly used in a variety of civil and industrial warehousing fields, using handling apparatuses such as stacking cranes to move back and forth in roadways between carriers, instead of manually picking and handling the goods on the carriers. The current handling apparatuses such as stacking cranes have a low handling speed, thus causing the problem of low working efficiency, which cannot adapt to the development need of the warehousing system.

### SUMMARY

In order to solve the problems in the prior art, the present disclosure provides a container loading and unloading device, a warehousing system and a container taking and placing method.

According to a first aspect of the present disclosure, a container loading and unloading device is provided, and includes at least two loading and unloading units, which are arranged in a horizontal X-axis direction in a spaced manner, each loading and unloading unit including: a support assembly, the support assembly extending in a vertical Y-axis direction; and at least one container taking and conveying assembly, the container taking and conveying assembly being controlled by a driving assembly to move along the support assembly in the Y-axis direction; where the container taking and conveying assembly includes a taking and placing assembly and a bearing assembly, the taking and placing assembly being configured to move in a Z-axis direction to take out a container from a carrier and load the same onto the bearing assembly, or to unload the container from the bearing assembly and place the same on the container; the carrier is provided with at least two rows and at least two columns of container storage units on a plane where an X-axis and a Y-axis are located, one container storage unit includes at least one storage position in the Z-axis direction, and one storage position is configured to accommodate at least one container; and the at least two loading and unloading units are configured to load and unload the container on a same carrier.

In an embodiment of the present disclosure, a number of the loading and unloading units corresponds to a number of columns of the container storage units on the same carrier one to one, and different loading and unloading units correspond to different columns of the same carrier.

In an embodiment of the present disclosure, the loading and unloading unit is configured to move in the X-axis direction, and the same loading and unloading unit corresponds to different columns of the same carrier.

In an embodiment of the present disclosure, the support assembly includes a stand column, the stand column is provided with a sliding track, the container taking and conveying assembly is slidably fitted with the stand column by means of the sliding track.

In an embodiment of the present disclosure, each loading and unloading unit is independently controlled.

In an embodiment of the present disclosure, a gantry assembly is further included, one end of the support assembly being connected to a top of the gantry assembly and the other end of the support assembly being connected to a bottom of the gantry assembly, or connected to other supporting surfaces.

In an embodiment of the present disclosure, the container taking and conveying assembly takes and places the container by at least one of sucking, pushing, clamping, grabbing, hooking, holding, and lifting.

In an embodiment of the present disclosure, the moving assembly is configured to move along a second guiding portion until the taking and placing assembly is lower than a bearing surface of the bearing assembly.

In an embodiment of the present disclosure, the first guiding portion and the second guiding portion are guiding slots formed in a guiding mechanism, and the second guiding portion is configured to extend downwardly at an angle from an end of the first guiding portion.

In an embodiment of the present disclosure, the bearing assembly is configured to bear a container; an accommodating space for accommodating the container is formed in the bearing assembly; the taking and placing assembly is configured to take out the container from a first target position and load the same onto the bearing assembly, or to unload the container from the bearing assembly and place the same at a second target position; a moving assembly is further provided, the moving assembly being configured to drive the taking and placing assembly to move in a first moving trajectory and a second moving trajectory; in the first moving trajectory, the moving assembly is configured to drive the taking and placing assembly to move in the accommodating space of the bearing assembly to load and unload the container; in the second moving trajectory, the moving assembly is configured to drive the taking and placing assembly to leave the accommodating space of the bearing assembly to make the container enter the accommodating space and be borne on the bearing assembly.

In an embodiment of the present disclosure, the moving assembly includes the guiding mechanism and a sliding mechanism, the guiding mechanism includes a first guiding portion and a second guiding portion communicated together; the sliding mechanism is configured to move along the first guiding portion and the second guiding portion; the first guiding portion and the second guiding portion define the first moving trajectory and the second moving trajectory of the sliding mechanism, respectively.

In an embodiment of the present disclosure, the first guiding portion is configured to linearly extend in a horizontal direction, and the second guiding portion is in a different direction from the first guiding portion; the sliding mechanism is configured so that when the sliding mechanism moves along the first guiding portion, the taking and placing assembly moves in a linear direction in the accommodating space of the bearing assembly; and the sliding mechanism is configured so that after the sliding mechanism moves along the first guiding portion to the second guiding portion, the taking and placing assembly moves in a manner of gradually leaving the accommodating space of the bearing assembly.

In an embodiment of the present disclosure, the second guiding portion is configured to be located below the first guiding portion; and the moving assembly is configured so that after the moving assembly moves in place along the second guiding portion, the taking and placing assembly is configured to move to a position below the bearing assembly to avoid the accommodating space of the bearing assembly.

In an embodiment of the present disclosure, the first guiding portion and the second guiding portion are located in a same plane; and the sliding mechanism comprises: a fixed portion, the fixed portion being controlled by the driving assembly to move linearly in a direction parallel to a plane in which the first guiding portion and the second guiding portion are located; and a sliding portion, the sliding portion being slidably fitted with the fixed portion; and the sliding portion being guidably fitted in the first guiding portion and the second guiding portion; the taking and placing assembly being arranged on the sliding portion.

In an embodiment of the present disclosure, the taking and placing assembly includes a suction cup mechanism, and the suction cup mechanism is configured to be fitted with an end face of the container.

In an embodiment of the present disclosure, the container taking and conveying assembly includes a first open end and a second open end; and the bearing assembly is a conveying belt, and the conveying belt is configured to drive the container to move to the first open end or the second open end of the container taking and conveying assembly.

In an embodiment of the present disclosure, a limiting mechanism is further included, the limiting mechanism being configured to limit both sides of the container located on the bearing assembly.

In an embodiment of the present disclosure, the limiting mechanism includes a first limiting portion and a second limiting portion arranged in a spaced manner; and the first limiting portion and the second limiting portion are configured to move towards or away from each other relative to the bearing assembly in the X-axis direction to adjust a distance between the first limiting portion and the second limiting portion.

In an embodiment of the present disclosure, a first base is included, the first limiting portion and the second limiting portion being slidably fitted on the first base, and a transmission mechanism for driving the first limiting portion and the second limiting portion to move in the X-axis direction on the first base is further included.

In an embodiment of the present disclosure, the transmission mechanism includes a transmission belt controlled by a belt pulley and extending in the X-axis direction, and the first limiting portion and the second limiting portion are connected to both spaced sides of the transmission belt, respectively.

In an embodiment of the present disclosure, the limiting mechanism is arranged at a position above the bearing assembly and is configured to limit an upper region of the container.

In an embodiment of the present disclosure, a rotating mechanism is further included, the rotating mechanism being configured to drive the taking and placing assembly and the bearing assembly to rotate around the Y-axis.

In an embodiment of the present disclosure, the rotating mechanism includes a second base, and a revolving support portion rotatably connected to the second base, and the bearing assembly and the taking and placing assembly are relatively connected to the revolving support portion.

In an embodiment of the present disclosure, a first sensor is included, the first sensor being configured to determine whether the container is present at the storage position of the carrier when the container taking and conveying assembly is to take out the container from the carrier and/or determine whether the storage position of the carrier is empty when the container taking and conveying assembly is to place the container to the storage position of the carrier.

In an embodiment of the present disclosure, a second sensor is included, the second sensor being configured to determine a pose deviation between the container taking and conveying assembly and the container on the carrier.

In an embodiment of the present disclosure, the container loading and unloading device is further configured to adjust a pose thereof based on the pose deviation between the container loading and unloading device and the corresponding container as determined by the second sensor, to eliminate the pose deviation.

In an embodiment of the present disclosure, the first sensor and the second sensor are the same sensor.

In an embodiment of the present disclosure, the first sensor and the second sensor are a vision sensor, a depth information sensor or a 3D sensor.

According to a second aspect of the present disclosure, a warehousing system is further provided, including: a workstation area, and an operating station, a carrier parking area, and a container loading and unloading device being arranged in the workstation area; the carrier parking area being configured to park the carrier; the container loading and unloading device being located between the operating station and the carrier parking area and configured to transfer the container between the operating station and the carrier located in the carrier parking area.

In an embodiment of the present disclosure, at least two parking stations for parking the carriers are arranged in the carrier parking area.

In an embodiment of the present disclosure, at least two container loading and unloading devices are provided and correspond to different carriers located on different parking stations one to one.

In an embodiment of the present disclosure, the workstation area further includes a conveying line, the conveying line includes a conveying line inlet and a conveying line outlet, and the operating station is located on a conveying path of the conveying line; the conveying line inlet and the conveying line outlet are respectively provided with the container loading and unloading device; the container loading and unloading device located at the conveying line inlet is configured to take out the container from the carrier located in the carrier parking area and place the same on the conveying line; and the container loading and unloading device located at the conveying line outlet is configured to take out the container from the conveying line and place the same on the carrier located in the carrier parking area.

According to a third aspect of the present disclosure, a container taking and placing method is further provided and applied to a control server and a container loading and unloading device, including: sending, by the control server, a taking and placing instruction to the container loading and unloading device; and controlling, by the container loading and unloading device, at least two loading and unloading units to perform taking and placing operations in parallel on a container on a same carrier based on the received taking and placing instruction.

According to a fourth aspect of the present disclosure, a container taking and placing method is further provided, being applied to a control server, an automatic handling apparatus, and a warehousing system, and including: sending, by the control server, a handling instruction to the automatic handling apparatus and a taking and placing instruction to the warehousing system according to a task order; moving, by the automatic handling apparatus, a carrier to a carrier parking area or the carrier away from the carrier parking area based on the received handling instruction; and controlling, by the container loading and unloading device, at least two loading and unloading units to perform taking and placing operations in parallel on the container between an operating station and a same carrier based on the received taking and placing instruction.

The present disclosure has a beneficial effect that the container loading and unloading device takes and places the container by means of simultaneously operating the at least two loading and unloading units, the loading and unloading unit is arranged along the X-axis, and is capable of taking and placing containers in the container storage unit corresponding to a column of the carrier, and the container taking and conveying assembly can move along the support assembly to the container storage units of different heights, and can take and place containers on the carrier instead of manual work, with higher working efficiency.

Other features of the present disclosure and the advantages thereof will become clear from the following detailed description of exemplary embodiments of the present disclosure with reference to the accompanying drawings.

### BRIEF DESCRIPTION OF THE DRAWINGS

Accompanying drawings incorporated into the specification and constituting part of the specification show embodiments of the present disclosure, and are used for explaining a principle of the present disclosure together with the description thereof.
FIG. 1 is a schematic diagram of an overall structure of a container loading and unloading device provided by an embodiment of the present disclosure;
FIG. 2 is a schematic diagram of an overall structure of a container taking and conveying assembly provided by an embodiment of the present disclosure;
FIG. 3 is a schematic structural diagram of a moving assembly and a driving assembly of the container taking and conveying assembly provided by an embodiment of the present disclosure;
FIG. 4 is a schematic structural diagram of a taking and placing assembly and the moving assembly of the container taking and conveying assembly provided by an embodiment of the present disclosure;
FIG. 5 is a schematic diagram of the taking and placing assembly of the container taking and conveying assembly provided by an embodiment of the present disclosure being in a first moving trajectory;
FIG. 6 is a schematic diagram of the taking and placing assembly of the container taking and conveying assembly provided by an embodiment of the present disclosure being in a second moving trajectory;
FIG. 7 is a schematic structural diagram of a limiting mechanism of the container loading and unloading device provided by an embodiment of the present disclosure;
FIG. 8 is a schematic structural diagram of a rotating mechanism of the container loading and unloading device provided by an embodiment of the present disclosure;
FIG. 9 is a schematic diagram of an overall structure of a container loading and unloading device provided by an embodiment of the present disclosure;
FIG. 10 is a schematic principle diagram of a warehousing system provided by an embodiment of the present disclosure;
FIG. 11 is a schematic principle diagram of a container taking and placing method provided by an embodiment of the present disclosure;
FIG. 12 is a schematic principle diagram of another container taking and placing method provided by an embodiment of the present disclosure;
FIG. 13 is a schematic principle diagram of a picking system provided by an embodiment of the present disclosure;
FIG. 14 is a schematic principle diagram of a container taking method provided by an embodiment of the present disclosure; and
FIG. 15 is a schematic principle diagram of a container conveying method provided by an embodiment of the present disclosure.

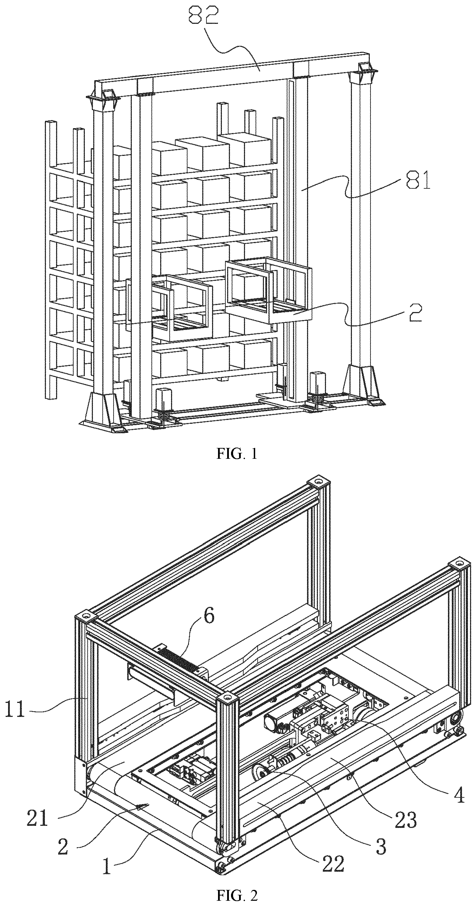

The one-to-one correspondence between the names of various assemblies and the reference numerals in FIG. 1 to FIG. 15 is as follows:
1: base; 11: bracket;
2: bearing assembly; 21: conveying belt; 22: anti-falling flange; 23: correcting guiding mechanism;
3: taking and placing assembly; 31: suction cup mechanism; 32: fixed base; 33: cushioning device;
4: moving assembly; 41: guiding mechanism; 411: first guiding portion; 412: second guiding portion; 42: sliding mechanism; 421: fixed portion; 422: sliding portion; 4220: sliding block; 43: guiding rod;
5: driving assembly; 51: belt pulley; 52: conveyor belt;
6: positioning system;
7: frame; 71: X-axis track; 72: Y-axis track;
81: support assembly; 82: gantry assembly;
9: limiting mechanism; 91: first limiting portion; 92: second limiting portion; 93: first base; 94: transmission mechanism; 95: sliding guiding structure;
10: rotating mechanism; 101: second base; 102: revolving support portion; 103: slewing bearing.

### DETAILED DESCRIPTION

Various exemplary embodiments of the present disclosure will be described in more detail now with reference to the accompanying drawings. It should be noted that unless otherwise specifically stated, the relative arrangement of components and steps, numerical expressions and values set forth in these embodiments do not limit the scope of the present disclosure.

The following description of at least one exemplary embodiment is in fact merely illustrative and is in no way intended as any limitation of the present disclosure and the application or use thereof.

Techniques, methods and apparatuses known to those of ordinary skill in the art may not be discussed in detail, but where appropriate, the techniques, methods and apparatuses should be considered as part of the specification.

In all examples shown and discussed herein, any specific values should be construed as merely exemplary, rather than as limitations. Thus, other examples of exemplary embodiments may have different values.

It should be noted that: similar symbols and letters indicate similar terms in the accompanying drawings below, so that once an item is defined in one of the accompanying drawings, no further discussion thereof is required in the subsequent accompanying drawings.

Specific embodiments of the present disclosure will be described below in conjunction with the accompanying drawings.

Herein, "upper", "lower", "front", "back", "left", "right", etc. are used only for indicating the relative position relationship between the relevant parts, and not to limit the absolute position of these relevant parts.

Herein, "first", "second", etc. are used only for distinguishing each other, not for indicating the degree of importance and order, and the premise of mutual existence, etc.

Herein, "equal", "same", etc. are not strictly mathematical and/or geometrical limitations, but also include errors that are understandable to those skilled in the art and are permitted in manufacture or use, etc.

Unless otherwise stated, the range of values herein includes not only the entire range within its two endpoints, but also a number of subranges contained therein.

The present disclosure provides a container loading and unloading device, for loading and unloading containers on carriers. A carrier has a plurality of storage positions for storing containers, which are arranged in a horizontal direction and in a vertical direction, and the carrier may be a movable rack. The containers in the present disclosure are mainly containers used for loading goods in logistics, including, but not limited to, work bins, trays, packing boxes, etc., which is not limited herein. The container loading and unloading device is capable of taking away a container on a designated storage position on the carrier or placing a container on a designated storage position of the carrier.

In the present disclosure, the carrier is provided with at least two rows and at least two columns of container storage units on a plane where an X-axis and a Y-axis are located, one container storage unit includes at least one storage position in a Z-axis direction, and one storage position can accommodate at least one container. The X-axis can be provided to extend in the horizontal direction, the Y-axis can be provided to extend in the vertical direction, and a Z-axis can be provided to extend in a direction perpendicular to a vertical plane where the X-axis and the Y-axis are located. The container loading and unloading device is capable of moving in a space in three directions of the X-axis, the Y-axis and the Z-axis to load and unload containers at different positions of the carrier. The Z-axis, the Y-axis and the Z-axis form a mutually perpendicular coordinate system.

The container loading and unloading device includes at least two loading and unloading units. The at least two loading and unloading units are arranged in a spaced manner in the horizontal X-axis direction. The at least two loading and unloading units are configured to load and unload containers on the same carrier. Each loading and unloading unit includes a support assembly and at least one container taking and conveying assembly. The container taking and conveying assembly is configured to take and place the container on the carrier. The support assembly extends in the vertical Y-axis direction. The container taking and conveying assembly is controlled by a driving assembly to move along the support assembly in the Y-axis direction. The at least two loading and unloading units can effectively improve the working efficiency of the container loading and unloading device.

### Embodiment I

In this embodiment, referring to FIG. 1 and FIG. 2, a container taking and conveying assembly in a container loading and unloading device includes a taking and placing assembly 3 and a bearing assembly 2. The bearing assembly 2 is configured to bear a container. The taking and placing assembly 3 is capable of grabbing or loosening the container. Furthermore, the taking and placing assembly 3 is configured to move in the Z-axis direction to take out a container from a carrier and load the same onto the bearing assembly 2, or to unload the container from the bearing assembly 2 and place the same on the carrier.

In an embodiment, a number of the loading and unloading units corresponds to a number of columns of the container storage units on the same carrier one to one, with the different loading and unloading units corresponding to different columns of the same carrier. In the embodiment, each loading and unloading unit corresponds to one column of container storage units in the carrier. The position of the loading and unloading unit is relatively fixed. The loading and unloading unit is only configured to take and place containers on the container storage units of the corresponding column. The container taking and conveying assembly on each loading and unloading unit is able to move along the support assembly 81 in the Y-axis direction to take away containers of different heights on the container storage units of the same column.

In an embodiment, the loading and unloading unit is configured to move in the X-axis direction, with the same loading and unloading unit corresponding to different columns of the same carrier. The loading and unloading unit can move along the X-axis to a position corresponding to one column of container storage units on the carrier. The container taking and conveying assembly can move along the support assembly 81 in the Y-axis direction to take away containers of different heights on the column of container storage units. In this embodiment, the number of the loading and unloading units is less than the number of columns of the container storage units on the carrier, which can relatively reduce the number of the loading and unloading units and reduce the manufacturing cost of the container loading and unloading device.

In a specific embodiment, referring to FIG. 1, four columns of container storage units are arranged on the carrier from left to right. Two loading units are arranged on the left and right, and respectively move in the X-axis direction. The loading unit on the left side can correspond to the two columns of container storage units on the left side. The loading unit on the right side can correspond to the two columns of container storage units on the right side.

In an embodiment, the support assembly 81 includes a stand column. The stand column is provided with a sliding track. The sliding track extends in the Y-axis direction. The container taking and conveying assembly is slidably fitted with the stand column by means of the sliding track and can move up and down to different heights along the stand column, thus corresponding to the container storage units of different heights.

The sliding track may be a sliding groove, a sliding rod and other structures. A sliding block or a roller fitting with the sliding groove, a sliding sleeve fitting with the sliding rod and other structures may be arranged on the container taking and conveying assembly. The above structure is only an example, and there is no specific limitation in the present disclosure, as long as the movement of the container taking and conveying assembly along the stand column in the Y-axis direction can be achieved.

In an embodiment, each loading and unloading unit is independently controlled and can operate independently. The at least two loading and unloading units are capable of operating simultaneously to take and place containers on different columns of container storage units. When one or more of the loading and unloading units take away the containers on the carrier, the other loading and unloading unit can place the container on the carrier. By enabling independent control of the loading and unloading units, the container loading and unloading device is more flexible and works more efficiently.

In an embodiment, referring to FIG. 1, a gantry assembly 82 is further included. The support assembly 81 is mounted on the gantry assembly 82. The gantry assembly 82 can be fixed to the ground, a wall, a roof, etc. The gantry assembly 82 can be arranged into a door-type structure, a frame-type structure, etc. The door-type assembly can be arranged side by side with the carrier. The door-type assembly extends in the X-axis direction. One end of the support assembly 81 can be connected to the top of the gantry assembly 82 and the other end of the support assembly can be connected to the bottom of the gantry assembly 82. When the gantry assembly 82 is arranged into a door-type structure, the other end of the support assembly 81 may also be connected to other support surfaces, such as the ground.

In the embodiment in which the loading and unloading unit can move in the X-axis direction, the gantry assembly 82 is provided with a track extending in X-axis direction at least at the top. The support assembly 81 can be slidably fitted with the track on the gantry assembly 82 so as to move in the X-axis direction. The track on the gantry assembly 82 can be a structure such as a sliding groove, a sliding rod, etc., which is not specifically limited in the present disclosure.

The container taking and conveying assembly takes and places the container by any one of sucking, pushing, clamping, grabbing, hooking, holding, and lifting. The specific mode for the container taking and conveying assembly to take and place the container is not limited in the present application. The container taking and conveying assembly of a holding fork type structure includes two telescopic arms. The two telescopic arms can be extended or retracted in the Z-axis direction at the same time to take and place the container. The holding fork type structure is the prior art, which can be implemented by a person skilled in the art, and will not be repeated here. Certainly, the container taking and conveying assembly can also be arranged to grab and place the container in other means.

The container taking and conveying assembly is used for transferring the container between different target positions. The container taking and conveying assembly mainly includes a base. The bearing assembly and the taking and placing assembly are arranged on the base. The bearing assembly is used for bearing the container and has an accommodating space for accommodating the container. The taking and placing assembly is used for taking out the container from a first target position and loading the same onto the bearing assembly, or is used for unloading the container from the bearing assembly and placing the same at a second target position.

The moving trajectory of the taking and placing assembly includes a first moving trajectory and a second moving trajectory. The container taking and conveying assembly further includes a moving assembly connected to the taking and placing assembly and driving the taking and placing assembly to move in the first moving trajectory and the second moving trajectory, and a driving assembly for driving the moving assembly to move.

When the driving assembly drives the moving assembly to move in the first moving trajectory, the moving assembly is configured to drive the taking and placing assembly to move in the accommodating space of the bearing assembly, to load the container at the first target position onto the bearing assembly, or to unload the container from the bearing assembly and place the same at the second target position by a reciprocal motion such as extending and retracting.

The first target position and the second target position can be corresponding container positions on the carrier. The first target position and the second target position may be the same container position or may be different container positions, without limitation here.

When the driving assembly drives the moving assembly to move in the second moving trajectory, the moving assembly is configured to drive the taking and placing assembly to leave the accommodating space of the bearing assembly to make the container enter the accommodating space of the bearing assembly and be borne on the bearing assembly.

For the container taking and conveying assembly of the present disclosure, in the first moving trajectory, the moving assembly drives the taking and placing assembly to move in the accommodating space of the bearing assembly to load and unload the container; and in the second moving trajectory, the moving assembly drives the taking and placing assembly to leave the accommodating space of the bearing assembly to make the container be able to be accommodated in the accommodating space or move in the accommodating space. For the container taking and conveying assembly of the present disclosure, the taking and placing assembly does not occupy the space of the bearing assembly, making the container taking and conveying assembly more compact in structure and capable of adapting to a narrow work space.

In an embodiment, as shown in FIG. 2, the base 1 provides support for the container taking and conveying assembly. The base 1 can be arranged into any structure such as a flat plate shape, a frame shape, etc., and can be arranged at the bottom of, or around, the bearing assembly 2, and a person skilled in the art can choose the structure and position of the base. As shown in FIG. 1, the base 1 is arranged into a frame-shaped structure and can be arranged below the bearing assembly 2 to support the bearing assembly 2. The bearing assembly 2 is provided with a bearing surface for supporting the container, and an accommodating space for accommodating the above container is above the bearing surface.

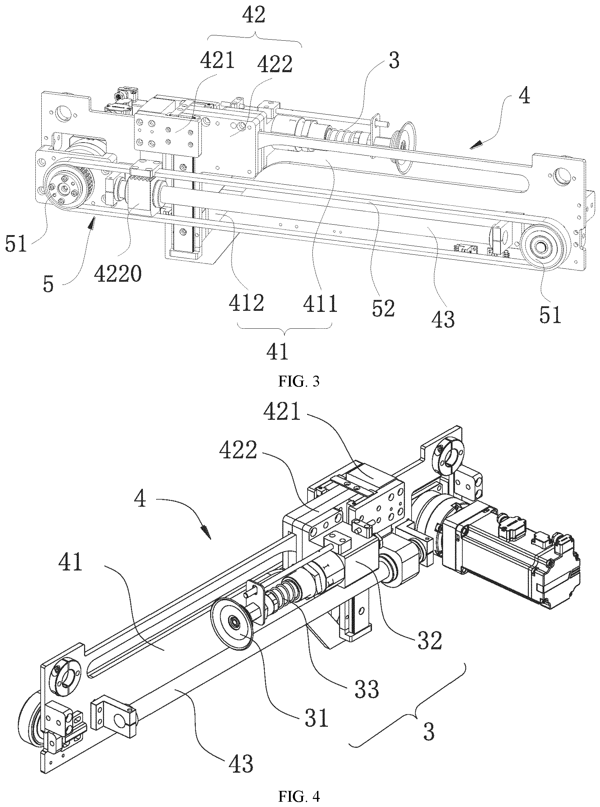

In an embodiment, a moving assembly 4 includes a guiding mechanism 41 and a sliding mechanism 42. As described in FIG. 4 to FIG. 7, the guiding mechanism 41 includes a first guiding portion 411 and a second guiding portion 412 communicated together. The first guiding portion 411 and the second guiding portion 422 define a first moving trajectory and a second moving trajectory of the moving assembly, respectively. That is, the moving assembly moves in the extension direction of the first guiding portion 411 and the second guiding portion 422, and can move along the first guiding portion 411 to be fitted with the second guiding portion 422.

The sliding mechanism 42 fits with the guiding mechanism 41. The sliding mechanism 42 is configured to move along the first guiding portion 411 and the second guiding portion 412. The taking and placing assembly 3 and the sliding mechanism 42 are connected together. When the sliding mechanism 42 moves along the first guiding portion 411 and the second guiding portion 412, the taking and placing assembly 3 is driven to move in the first moving trajectory and the second moving trajectory.

In a specific embodiment of the present disclosure, the first guiding portion 411 is configured to linearly extend in the horizontal direction. The second guiding portion 412 is in a different direction from the first guiding portion 412. The sliding mechanism 42 is configured so that when the sliding mechanism moves along the first guiding portion 411, the taking and placing assembly 3 moves in a linear direction in the accommodating space of the bearing assembly 2. When the moving assembly 4 moves along the first guiding portion 411, the taking and placing assembly 3 can be driven to load the container onto the bearing assembly 2 in the horizontal direction.

Further, the moving assembly 4 is configured so that after the moving assembly moves along the first guiding portion 411 to the second guiding portion 412, the taking and placing assembly 3 moves in a manner of gradually leaving the accommodating space until the taking and placing assembly 3 is located outside the accommodating space of the bearing assembly 2.

Specifically, when the taking and placing assembly 3 moves in the first moving trajectory, the taking and placing assembly 3 is located above the bearing assembly 2 and moves in the extension direction of the bearing assembly 2. The taking and placing assembly 3 can move from the accommodating space above the bearing assembly 2 to extend outside the front end of the bearing assembly 2, so that the container located at the first target position in front of the bearing assembly 2 can be loaded. After the reverse movement of the taking and placing assembly 3, the loaded container can move to a position corresponding to the bearing assembly 2. Thus the container can be placed on the bearing assembly 2.

Certainly, in another application scenario, after the container is located on the bearing assembly 2, the taking and placing assembly 3 can unload the container to the second target position in the same movement manner as described above.

Since the second guiding portion 412 is located in a different direction from the first guiding portion 411, the taking and placing assembly 3 can leave the accommodating space of the bearing assembly 2 in a manner of gradually deviating from the bearing assembly 2 when the moving assembly 4 moves along the second moving trajectory. Then the container can move fully onto the bearing assembly 2 or pass through the accommodating space of the bearing assembly 2.

In the guiding mechanism 41, the second guiding portion 412 is connected to the end of the first guiding portion 411 and deviates from the extension direction of the first guiding portion 411 itself.

In an embodiment of the present disclosure, after the sliding mechanism 42 moves in place along the second guiding portion 412, the taking and placing assembly 3 is configured to move to one side of the bearing assembly 2 to leave the accommodating space of the bearing assembly 2. "One side" in this position is relative to the extension direction of the bearing assembly 2. For example, with reference to the view direction of FIG. 2, the bearing assembly 2 extends from the left to the right side, and "one side" in this position refers to the front or rear side of the bearing assembly 2.

In this embodiment, the first guiding portion 411 may extend in the extension direction of the bearing assembly. The second guiding portion may be located in the same horizontal plane as the first guiding portion 411 and extend in a direction away from or gradually away from one side of the bearing assembly.

In another embodiment of the present disclosure, the second guiding portion 412 is configured to be located above the first guiding portion 411. Specifically, the first guiding portion 411 extends linearly in the horizontal direction. The second guiding portion 412 extends upwardly at an angle relative to the first guiding portion 411, with an obtuse angle formed between the two guiding portions. After the moving assembly 4 moves in place along the second guiding portion 412, the taking and placing assembly 3 is configured to move to a position above the bearing assembly 2 to leave the accommodating space of the bearing assembly 2. At this moment, the distance among the taking and placing assembly 3, the moving assembly 4 and the bearing assembly should be greater than the height of the accommodating space.

In another embodiment of the present disclosure, as described in FIG. 3 to FIG. 6, the second guiding portion 412 is configured to be located below the first guiding portion 411. Specifically, the first guiding portion 411 extends linearly in the horizontal direction. The second guiding portion 412 is located in the same vertical plane as the first guiding portion 411 and extends downwardly at an angle relative to the first guiding portion 411, with an obtuse angle formed between the two guiding portions. The moving assembly 4 is configured so that after the moving assembly moves in place along the second guiding portion 412, the taking and placing assembly 3 is configured to move to a position below the bearing assembly 2 to avoid the accommodating space of the bearing assembly 2.

In this embodiment, the middle region of the bearing assembly 2 may be provided with a gap or space for the taking and placing assembly 3 and the moving assembly 4 to pass through. When the moving assembly 4 drives the taking and placing assembly 3 to move in the second moving trajectory, the taking and placing assembly can pass through the gap or space in the middle of the bearing assembly 2 so as to be able to move to a position below the accommodating space.

The guiding means in the present disclosure may be a conventional guiding structure such as a guiding plate, a guiding rod, or a track. The first guiding portion and the second guiding portion can be sliding grooves or guiding holes formed in the guiding mechanism, or two guiding rods, in different directions, connected at the ends. The above guiding mechanism is only an example, and it is understood by those skilled in the art that structures with two guiding portions in different directions are both included in the scope of protection of the present disclosure.

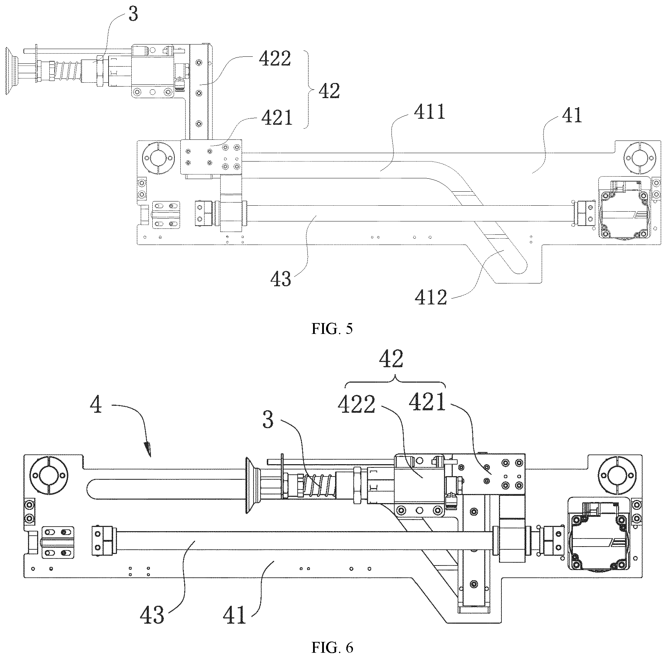

In a specific embodiment of the present disclosure, as described in FIG. 3 and FIG. 5, the guiding mechanism 41 is a guiding plate. The first guiding portion 411 and the second guiding portion 412 are interconnected guiding grooves formed in the guiding plate. The sliding mechanism 42 is guidably fitted with the guiding groove so that the sliding mechanism can slide along the guiding groove. The guiding groove can be arranged on one side or both sides of the guiding plate, or can also penetrate through both sides of the guiding plate to form a through groove. The guiding plate is vertically distributed with respect to the bearing assembly. The upper end surface of the guiding plate is lower than the bearing surface on the bearing assembly 2 to avoid the accommodating space. The first guiding portion 41 is configured as a guiding groove extending in the horizontal direction. The second guiding portion 42 is configured as a guiding groove extending downwardly at an angle from the end of the first guiding portion 411. When the sliding mechanism 42 drives the taking and placing assembly 3 to move along the second guiding portion 412, the taking and placing assembly can pass through the gap or space in the middle of the bearing assembly 2 until the taking and placing assembly leaves the accommodating space of the bearing assembly.

In an embodiment of the present disclosure, referring to FIG. 4, FIG. 5 and FIG. 6, the sliding mechanism 42 includes a fixed portion 421 and a sliding portion 422. The fixed portion 421 and the sliding portion 422 are slidably fitted together so that the sliding portion 422 can slide relative to the fixed portion 421 under the action of an external force. The fixed portion 421 is controlled by the driving assembly 5. The driving assembly 5 is capable of providing a driving force for linear motion to drive the fixed portion 421 to linearly move in a direction parallel to the plane where the first guiding portion 411 and the second guiding portion 412 are located. Meanwhile, the sliding portion 422 is guidably fitted in the first guiding portion 411 and the second guiding portion 412. The taking and placing assembly 3 is arranged on the sliding portion 422. The sliding portion 422 can drive the taking and placing assembly 3 to move along the first guiding portion 411 and the second guiding portion 412. The second guiding portion 412 extends at an angle with respect to the first guiding portion 411 and forms an obtuse angle with the first guiding portion 411.

The direction of relative movement between the fixed portion 421 and the sliding portion 422 can be set perpendicular to the extension direction of the first guiding portion 411. The driving assembly 5 can drive the sliding portion 422 via the fixed portion 421 to move simultaneously. The movement direction of the fixed portion 421 is consistent with the extension direction of the first guiding portion 411 and is not consistent with the extension direction of the second guiding portion 422.

Referring to FIG. 6, since the movement direction of the fixed portion 421 is different from the extension direction of the second guiding portion 422, when the driving assembly 5 drives the fixed portion 421 to move linearly in the horizontal direction, the sliding portion 422 gradually moves upwardly relative to the fixed portion 421 under the restrictive effect of the second guiding portion 422, thereby driving the taking and placing assembly 3 to move upwardly to enter the accommodating space of the bearing assembly 2. The reverse movement enables the taking and placing assembly 3 to leave the accommodating space of the bearing assembly 2.

Referring to FIG. 5, after the sliding portion 422 moves into the first guiding portion 411, since the movement direction of the fixed portion 421 is the same as the extension direction of the first guiding portion 411, no relative movement occurs between the fixed portion 421 and the sliding portion 422 during the continuing movement of the fixed portion 421. That is, both the fixed portion 421 and the sliding portion 422 move linearly in the horizontal direction, therefore the sliding portion 422 can drive the taking and placing assembly 3 to move linearly in the accommodating space of the bearing assembly 2 to extend the driving assembly 3 and, in the reverse direction, to retract the taking and placing assembly 3.

Both the fixed portion 421 and the sliding portion 422 can be arranged into a blocky structure. In a specific embodiment, as shown in FIG. 3 to FIG. 6, the guiding mechanism 41 is a vertically arranged guiding plate. The first guiding portion 411 and the second guiding portion 412 are slot holes or through holes formed in the guiding plate. The first guiding portion 411 linearly extends in the horizontal direction. The second guiding portion 412 extends downwardly at an angle with respect to the first guiding portion 411. The fixed portion 421 may include two clamping plates. The top ends of the two clamping plates are connected together. A sliding groove is provided between the two clamping plates of the fixed portion 421. The sliding portion 422 is clamped between the two clamping plates of the fixed portion 421 and fits with the sliding groove in the fixed portion 421 to be able to slide with respect to the fixed portion 421. The sliding portion 422 also includes two clamping plates connected together at the top end, with a gap reserved between the two clamping plates and the guiding plate located between the two clamping plates of the sliding portion 422. A sliding member is further connected between the two clamping plates of the sliding portion 422. The sliding member is slidably fitted in the first guiding portion 411 and the second guiding portion 412. The sliding member can be a structure such as a pin shaft, a sliding block, or a roller. The roller can reduce the friction force with the guiding plate.

The driving assembly 5 provides a linear driving force. The sliding mechanism 42 and the guiding mechanism 41 are connected between the driving assembly 5 and the taking and placing assembly 3, which can convert the linear driving force of the driving assembly 5 into driving forces along the first guiding portion 411 and the second guiding portion 412 in two directions, and drive the taking and placing assembly 3 to move in the first moving trajectory and the second moving trajectory in different directions.

The driving assembly 5 can be a linear motor, a lead screw assembly, a gear and rack, a conveyor belt, etc. Driving devices capable of achieving a linear motion are all included in the scope of protection of the present disclosure. In a specific embodiment, the driving assembly 5 is of a belt pulley structure, referring to FIG. 3, which includes at least two belt pulleys 51, a conveyor belt 52 wound around the belt pulleys 51, and a motor driving the belt pulleys 51 to rotate. The output end of the motor can be directly connected to one of the belt pulleys 51, or can be in transmission connection with the belt pulley 51 via a transmission structure such as a gear assembly. The movement direction of the conveyor belt 52 is in the same direction as the extension direction of the first guiding portion 411. The fixed portion 421 of the sliding mechanism 42 is fixedly connected to the conveyor belt 52. The motor, by adjusting the rotating direction, is able to drive the fixed portion 421 through the belt pulleys 51 and the conveyor belt 52 to perform a reciprocating motion.

The driving assembly 5 can be mounted on the base 1 or on the bearing assembly, and can also be mounted on the guiding mechanism 41 of the moving assembly 4. In a specific embodiment, the guiding mechanism 41 is a guiding plate. The belt pulleys 51 and the conveyor belt 52 of the driving assembly 5 are arranged on the guiding plate. The two belt pulleys 51 are arranged. The two belt pulleys 51 are arranged at both ends of the first guiding portion 411 and the second guiding portion 412, respectively, and are rotatably connected to the guiding plate via a rotating shaft. The fixed portion 421 is provided with a connection member fixedly connected to the conveyor belt 52.

In a specific embodiment, as shown in FIG. 3, the belt pulleys 51 and the conveyor belt 52 of the driving assembly 5 are arranged on one side of the guiding plate. The taking and placing assembly 3 is arranged on the other side of the guiding plate to avoid interference with the driving mechanism when the taking and placing assembly 3 moves. The motor can be arranged at the end of the guiding plate close to the second guiding portion 412.

The strength of the conveyor belt 52 of the driving assembly 5 is low. In order to improve the stability of the sliding portion 422 in the movement direction, at least one guiding rod 43 can be arranged. The extension direction of the guiding rod 43 is the same as the movement direction of the fixed portion 421. The fixed portion 421 fits with the guiding rod 43. The fixed portion 421 is configured to move linearly in the extension direction of the guiding rod 43 under the driving of the conveyor belt 52. The guiding rod 43 can be arranged at the position of the base 1, the bearing assembly 2, or the guiding mechanism 41, etc.

In an embodiment as shown in FIG. 3, the guiding rod 43 is connected to the guiding plate. Specifically, both ends of the two guiding rods 43 are fixed to both sides of the guiding plate by means of mounting bases, respectively. The fixed portion 421 is provided with a sliding block 4220 slidably fitted with the guiding rod 43. The sliding block 4220 is arranged on the guiding rod 43 in a manner that the guiding rod penetrates through the sliding block. Two guiding rods 43 are arranged. The two guiding rods 43 are arranged on two opposite sides of the guiding plate, respectively. The two clamping plates of the fixed portion 421 are respectively provided with the sliding blocks 4220 sliding along the two guiding rods 43.

The taking and placing assembly 3 can be loaded with the container in a variety of ways, including, but not limited to, snap fit, magnetic attraction, vacuum suction cup adsorption, etc. In a specific embodiment, the taking and placing assembly 3 includes a suction cup mechanism 31. The suction cup mechanism 31 is configured to be fitted with the end face of the container so as to load the container. The taking and placing assembly 3 further includes a fixed base 32. The suction cup mechanism 31 is connected to the fixed base 32. The fixed base 32 is connected to the sliding portion 422 of the sliding mechanism 42.

In a specific embodiment of the present disclosure, referring to FIG. 4 and FIG. 6, a cushioning device 33 may be arranged between the suction cup mechanism 31 and the fixed base 32 for cushioning the impact force of the suction cup mechanism 31 when loading a container. The cushioning device 33 can include a spring connected between the suction cup mechanism 31 and the fixed base 32. A certain margin for activities is reserved between the suction cup mechanism 31 and the fixed base 32. The suction cup mechanism 31 can overcome the acting force of the spring to be displaced relative to the fixed portion 32 under the action of the external force, thereby enabling the spring to cushion the external force borne by the suction cup mechanism 31.

The suction cup mechanism 31 can use a vacuum suction cup, the number of which can be one or more, without limitation here. By controlling a vacuum source, it is possible to control the suction cup mechanism 31 to adsorb the end face of the container, or to release the container and place the container on the bearing assembly or on the carrier.

In the above embodiment, when the moving assembly drives the taking and placing assembly to do a reciprocating motion along the first guiding portion, the taking and placing assembly may extend and suck the container located at the first target position of the carrier, and drive the container to move to the bearing assembly. At this moment, the taking and placing assembly can release the container and place the container on the bearing assembly.

In an embodiment of the present disclosure, the taking and placing assembly can drive the container to fully move to the bearing assembly and then release the container to fully bear the container on the bearing assembly.

In an embodiment of the present disclosure, the taking and placing assembly can drive the container to move until the container is partially located on the bearing assembly. After the taking and placing assembly releases the container, the container can be fully pushed onto the bearing assembly by a pushing device.

In a specific embodiment of the present disclosure, the bearing assembly 2 is configured to be able to convey the container. Both ends of the bearing assembly 2 may be noted as a first open end, and a second open end, respectively. Referring to the view direction of FIG. 2, the left end of the bearing assembly 2 is the first open end and the right end of the bearing assembly is the second open end. The bearing assembly 2 is capable of conveying the container to move between the first open end and the second open end thereof. The accommodating space is arranged between the first open end and the second open end of the bearing assembly 2.

In an embodiment, as described in FIG. 2 and FIG. 3, the bearing assembly 2 includes a conveying belt 21. The upper surface of the conveying belt 21 is a bearing surface for supporting the container. The conveying belt 21 is capable of conveying the container in the horizontal direction. Moreover, the transport direction of the conveying belt 21 is the same as the extension direction of the first guiding portion 411. When the taking and placing assembly 3 loaded with the container moves to the connected position of the first moving trajectory and the second moving trajectory or adjacent to the connected position, the container is driven into the first open end. At this moment, the taking and placing assembly 3 releases the container and moves along the second moving trajectory to leave the accommodating space of the bearing assembly. The container may then be moved by the conveying belt until the container is fully borne on the conveying belt 21.

The bearing assembly 2 further includes a plurality of transmission rollers fitting with the conveying belt 21 and a driving motor driving the conveying belt 21 to rotate by means of the transmission roller. In an embodiment, the bearing assembly 2 may be a belt conveyor. The structure and principle of the belt conveyor are the prior art, which can be understood by those skilled in the art, and will not be specifically described in the present disclosure.

In an embodiment, as described in FIG. 2, two conveying belts 21 may be arranged, the two conveying belts 21 are spaced apart and located on the same horizontal plane. The taking and placing assembly 3 and the moving assembly 4 may be arranged between the two conveying belts 21. The two conveying belts 21 move synchronously and transport the container simultaneously. The two conveying belts 21 can be driven by the same driving device. The taking and placing assembly 3, when moving in place along the first moving trajectory, is able to extend out of the first open end from a position between the two conveying belts 21 to adsorb the end face of the container. When the taking and placing assembly 3 moves in place along the second moving trajectory, the taking and placing assembly is capable of retracting to the position between the two conveying belts 21 and moving to a position lower than the bearing surface.

In a specific application scenario of the present disclosure, the conveying belt 21 is further configured to convey the container from the first open end to the second open end or to convey the container from the second open end to the second open end. For example, by conveyance of the conveying belt, the containers may be conveyed to the second open end and conveyed from the second open end to other target positions, such as to a workstation for picking, or to a conveying line thereof with the workstation. Alternatively, the container on the workstation conveying line can also enter the bearing assembly 2 via the second open end and after the container reaches a corresponding position via the conveyance of the bearing assembly 2, the taking and placing assembly moves along the first guiding portion to push the container located on the bearing assembly 2 to the target position of the carrier for storage via the first open end. In this process, the taking and placing assembly can push the container to the target position of the carrier for storage by the pushing action only, or can adsorb the container and push the container to the target position of the carrier for storage.

In an embodiment, to prevent the container from falling from both sides of the bearing assembly 2, anti-falling flanges 22 may be arranged at positions on both sides of the base 1. The anti-falling flanges 22 are located on the outside of the conveying belt so that the anti-falling flanges may be configured to limit the container on the conveying belt 21. Specifically, the anti-falling flanges 22 on both sides are each arranged into a strip-shaped structure and are in the same direction as the extension direction of the conveying belt 21. The anti-falling flanges 22 may extend from the first open end of the bearing assembly to the second open end thereof.

The base 1 can also be provided with correcting guiding mechanisms 23. The correcting guiding mechanisms 23 are configured to guide the container on the conveying belt 21 to move to the center of the bearing assembly. Specifically, as shown in FIG. 2, the correcting guiding mechanisms 23 are arranged on two opposite sides of the base 1. The correcting guiding mechanisms 23 on both sides are arranged symmetrically with respect to the centerline of the bearing assembly 2. The end portions of the correcting guiding mechanisms 23 are arranged into a flared structure, so as to enable the container to enter a position between the correcting guiding mechanisms 23 on both sides.

The anti-falling flanges 22 and the correcting guiding mechanisms 23 can be arranged independently of each other, or can be arranged into an integrally molded structure. In the embodiment as shown in FIG. 2, the anti-falling flanges 22 and the correcting guiding mechanisms 23 are connected into a whole. The anti-falling flanges 22 extend inward from the middle region between the first open end and the second open end to form the correcting guiding mechanism 23. The distance between the correcting guiding mechanisms 23 on both sides is smaller than the distance between the anti-falling flanges 22. The correcting guiding mechanisms 23 are connected to the anti-falling flanges 22 at both ends by beveled surfaces to form the flared structure, so as to enable the container to enter the position between the correcting guiding mechanisms 23.

In an embodiment, the container taking and conveying assembly further includes a detection device for detecting the position of the container. The detection device is able to detect the container when the taking and placing assembly 3 loads and unloads the container and enables the container to partially move onto the bearing assembly 2. At this moment, the taking and placing assembly 3 can place the container onto the bearing assembly 2. For example, a vacuum source to the suction cup mechanism 31 can be cut off so that the suction cup mechanism 31 can release the container. Therefore, the detection position of the detection device determines when the taking and placing assembly 3 will release the container. The detection position of the detection device can be adjusted according to the design, as long as the container can be eventually borne on the conveying belt. For example, the detection position of the detection position is a position where the moving assembly 4 moves into the first guiding portion adjacent to the second guiding portion.

The detection device includes, but is not limited to, a sensor, an infrared scanning device, a camera, etc. The detection device is capable of generating and sending a detection signal when detecting a container. In an embodiment, the detection device may be a pressure sensor. The pressure sensor is arranged on the bearing assembly 2. The pressure sensor is capable of detecting the pressure of the container and generating a detection signal when the container is moved to a corresponding position on the bearing assembly 2. In another embodiment, the detection device can be an infrared sensor, etc., which will not be specified here.

The container taking and conveying assembly of the present disclosure can be used for transferring the container on the carrier. The position of the container taking and conveying assembly needs to correspond to the target position on the carrier when the container is transferred.

In the actual warehousing environment, there are also factors such as an uneven ground or carrier mounting errors that cause the position of the container taking and conveying assembly to deviate from the target position on the carrier. To improve the positional accuracy, the container taking and conveying assembly further includes a positioning system 6. The positioning system 6 is configured to position the relative position between the container taking and conveying assembly and the carrier. The positioning system 6 is required to adjust the position of the container taking and conveying assembly when detecting that a positional deviation between the container taking and conveying assembly and the target position of the carrier reaches a preset range.

The positioning system may be a visual scanning module, a laser scanning module or an infrared scanning module, which obtains the positional information of the container or a container position by identifying the corresponding position on the carrier. As described in FIG. 2, the positioning system can be relatively arranged on the base 1. The base 1 can be provided with a bracket 11. The bracket 11 is located above the bearing assembly 2 and avoids the accommodating space so as not to interfere with the movement of the container. The bracket 11 can be arranged into a door-type structure. The bottom end of the bracket 11 is fixedly connected to both sides of the first open end of the bearing assembly 2. The positioning system is mounted on the top of the bracket 11, and located above the bearing assembly 2.

In a specific embodiment of the present disclosure, the positioning system 6 can be a two-dimensional imaging module, each container position on the carrier is provided with a two-dimensional identifier correspondingly. The identifier is located at the center of a cross beam on the front side of the container position. The two-dimensional imaging module is configured to acquire the positional information of the identifier on the carrier.

The two-dimensional imaging module can be arranged at the center position of the front end of the bearing assembly 2. It is beneficial for the two-dimensional imaging module to read the positional information of the identifier on the front cross beam thereof. After the two-dimensional imaging module obtains the positional information of the identifier on the cross beam, the height deviation and/or horizontal deviation of the container taking and conveying assembly relative to the container position at the target position can be obtained, thus providing a reference for adjusting the position of the container taking and conveying assembly.

### Embodiment II

This embodiment provides a container loading and unloading device. For the specific structure and principle, reference can be made to the container loading and unloading device in Embodiment I. The same part will not be repeated here. This embodiment differs from Embodiment I in that this embodiment further includes a limiting mechanism. The limiting mechanism is configured to limit both sides of a container located on the bearing assembly, and can replace the anti-falling flange and the correcting guiding mechanism in Embodiment I.

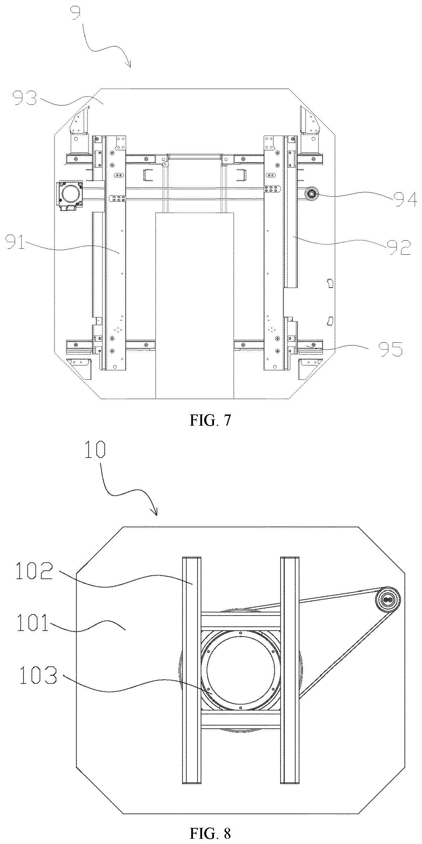

Specifically, referring to FIG. 7, the limiting mechanism 9 includes a first limiting portion 91 and a second limiting portion 92 arranged in a spaced manner. The first limiting portion 91 and the second limiting portion 92 are respectively arranged on both sides of the bearing assembly 2. A container is placed between the two limiting portions. The first limiting portion 91 and the second limiting portion 92 are configured to move towards or away from each other relative to the bearing assembly 2 in the X-axis direction to adjust the distance between the first limiting portion 91 and the second limiting portion 92 so as to adapt to containers in different sizes. When different types of containers are placed on the carrier, the size of the container can be adapted by adjusting the distance between the first limiting portion 91 and the second limiting portion 92. The first limiting portion 91 and the second limiting portion 92 can be arranged into structures such as a rod-shaped structure, a plate-shaped structure, a roller-shaped structure and the like. The present disclosure is not limited to this, as long as the first limiting portion and the second limiting portion can be arranged to block both sides of the container.

In an embodiment, referring to FIG. 7, the container loading and unloading device further includes a first base 93. The first base 93 can provide a mounting basis for the first limiting portion 91 and the second limiting portion 92. The first limiting portion 91 and the second limiting portion 92 are slidably fitted on the first base 93. The first base 93 can be provided with at least one set of sliding guiding structure 95 extending in the X-axis direction. The first limiting portion 91 and the second limiting portion 92 fit with the first base 93 through the sliding guiding structure 95. The sliding guiding structure 95 may include a sliding groove, a sliding block and other structures, which is not specifically limited in the present disclosure. In a preferred embodiment, two sets of the sliding guiding structures 95 are arranged. The two sets of sliding guiding structures 95 are near both ends of the first limiting portion 91 and the second limiting portion 92, respectively.

The first base 93 may be provided with a transmission mechanism 94 moving in the X-axis direction. The first limiting portion 91 and the second limiting portion 92 are driven to move on the first base 93 in the X-axis direction by the transmission mechanism 94. The transmission mechanism 94 may be, but is not limited to, a gear and rack structure, a connecting rod mechanism, a belt pulley mechanism, etc., which is not limited here by the present disclosure.

In a specific embodiment, referring to FIG. 7, the transmission mechanism 94 includes a transmission belt and belt pulleys. The transmission belt extends in the X-axis direction and is capable of being controlled to rotate by the belt pulleys. The belt pulleys can be driven by a motor. The first limiting portion 91 and the second limiting portion 92 can be connected to both spaced sides of the conveyor belt, i.e., both sides of the conveyor belt in the extension direction. The conveyor belt is in an annular structure, and both spaced sides of the conveyor belt move in opposite directions during rotation, so that the first limiting portion 91 and the second limiting portion 92 can be driven to be closer to each other or further away from each other, thus adjusting the relative positions therebetween.

In another embodiment, the limiting mechanism is 9 arranged at a position above the bearing assembly 2 and is configured to limit an upper region of the container. Specifically, the container can be placed between the bearing assembly 2 and the limiting mechanism 9, with the first limiting portion 91 and the second limiting portion 92 of the limiting assembly close to the top edges of the two opposite side faces of the container to avoid interference with the bearing assembly 2. The limiting mechanism 9 can be mounted on the base 1 by means of a bracket.

In an embodiment, referring to FIG. 8, the container loading and unloading device may further include a rotating mechanism 10. The rotating mechanism 10 is configured to drive the taking and placing assembly 3 and the bearing assembly 2 to rotate around the Y-axis, thus enabling flexible adjustment of the angle relative to the container. The container at the storage position may be subjected to collision, an unstable carrier and other reasons, so there is a pose deviation between the container and the taking and placing assembly 3 and between the container and the bearing assembly 2 in the horizontal plane. If the pose deviation is greater than the preset tolerance threshold, the container cannot be smoothly grabbed by the taking and placing assembly 3. At this moment, the angle of the driven taking and placing assembly 3 and the bearing assembly 2 relative to the container can be correspondingly adjusted through the rotating mechanism 10 to eliminate the pose deviation, so that the pose deviation is less than the preset tolerance threshold, and the driven taking and placing assembly 3 can smoothly grab the container on the carrier onto the bearing assembly 2.

The rotating mechanism 10 may include a second base 101 and a revolving support portion 102. The revolving support portion 102 is rotatably connected to the second base 101. The second base 101 can be connected to the support assembly 81 and move in the extension direction of the support assembly 81. The bearing assembly 2 and the taking and placing assembly 3 are relatively connected to the revolving support portion 102. The rotation axis of the revolving support portion 102 extends in the Y-axis direction and can rotate around the Y-axis relative to the second base 101 to adjust the angle of the bearing assembly 2 and the taking and placing assembly 3 relative to the container.

The revolving support portion 102 can be arranged into a plate-shaped structure, a frame-shaped structure, etc., which can play a supporting role for the bearing assembly 2 and the taking and placing assembly 3. Specifically, the revolving support portion 102 can include a plurality of support rods connected into a frame-shaped structure. The bearing assembly 2 and the taking and placing assembly 3 can be fixedly connected to the revolving support portion 102 by screwing, welding, gluing, etc., which is not limited in the present disclosure.

The revolving support portion 102 can be connected to the second base 101 by conventional rotating connection structures such as bearings, rotating shafts and shaft sleeves. In a preferred embodiment, referring to FIG. 8, the revolving support portion 102 is connected to the second base 101 by a slewing bearing 103. The revolving support portion 102 has an inner ring and an outer ring rotating relative to each other. One of the inner ring and the outer ring is fixedly connected to the revolving support portion 102 and the other one is fixedly connected to the second base 101.

The rotating mechanism 10 may also include a revolving drive mechanism for driving the revolving support portion 102 to rotate. The rotating mechanism 10 may be directly connected to the revolving support portion 102 by means of rotating driving, or may drive the revolving support portion 102 to rotate by driving the slewing bearing 103. The revolving drive mechanism includes, but is not limited to, a motor, a gear set, a belt pulley mechanism, etc., which is not limited in the present disclosure. In an embodiment of the present disclosure, the outer ring of the slewing bearing 103 is fixedly connected to the second base 101. The inner ring of the slewing bearing is fixedly connected to the bearing assembly 2 and the taking and placing assembly 3. The revolving drive mechanism includes a synchronous belt and a driving belt pulley. The synchronous belt is connected to the driving belt pulley and the inner ring of the slewing bearing 103. The driving belt pulley can drive the inner ring of the slewing bearing 103 to rotate through the synchronous belt. The inner ring drives the bearing assembly 2 and the taking and placing assembly 3 to rotate through the revolving support portion 102.

In an embodiment, the container loading and unloading device includes a first sensor. The first sensor is configured to detect the storage position of the carrier to determine whether a container is present at the storage position. The first sensor is configured to determine whether the container is present at the storage position of the carrier when the container taking and conveying assembly is to take out the container from the carrier; and/or determine whether the storage position of the carrier is empty when the container taking and conveying assembly is to place the container to the storage position of the carrier.

The first sensor is capable of generating an empty position detection signal or a non-empty position detection signal. When the container is taken out, the first sensor determines whether a container is present at the target storage position. The taking and placing assembly 3 can grab the container on the target storage position based on the non-empty position detection signal or does not do the action of grabbing the container based on the empty position detection signal to avoid the case where the taking and placing assembly 3 places the container to the non-empty storage position, causing the original container at the storage position to fall down, or the taking and placing assembly does the grabbing action in vain at the empty storage position.

In the process of taking out the container, if the first sensor sends a non-empty position detection signal, the taking and placing assembly 3 grabs the container on the storage position based on the non-empty position detection signal and places the same onto the bearing assembly 2; and if the first sensor sends an empty position detection signal, the taking and placing assembly 3 does not do the action of grabbing the container based on the empty position detection signal.

In the process of placing the container, if the first sensor sends an empty position detection signal, the taking and placing assembly 3 places the container on the bearing assembly 2 onto the storage position based on the empty position detection signal; and if the first sensor sends a non-empty position detection signal, the taking and placing assembly 3 does not do the action of placing the container based on the non-empty position detection signal.

In an embodiment, the container loading and unloading device includes a second sensor. The second sensor is configured to determine a pose deviation between the container taking and conveying assembly and the container on the carrier. The container loading and unloading device is further configured to adjust the pose thereof based on the pose deviation between the container loading and unloading device and the corresponding container as determined by the second sensor to eliminate the pose deviation.

Specifically, the second sensor is able to detect the three-dimensional position of the container and thus determine a three-dimensional deviation between the container and the container taking and conveying assembly, including the deviation in the X-axis direction, the deviation in the Y-axis direction, and the angular deviation in the horizontal plane direction. Based on the positional deviation, the container taking and conveying assembly is capable of adjusting the position by moving along the gantry assembly 82 and the support assembly 81 in the X-axis and Y-axis directions to eliminate the deviations in the X-axis and Y-axis directions. The container taking and conveying is also able to adjust the angular deviation with the container on the plane by rotating around the Y-axis through the rotating mechanism 10.

In an embodiment of the present disclosure, the second sensor obtains three-dimensional positional information of the container and determines the positional deviation between the container and the container taking and conveying assembly in the X-axis direction, i.e., the horizontal deviation. The support assembly 81 moves by a corresponding distance in the X-axis direction based on the horizontal deviation so that the position of the container taking and conveying assembly in the X-axis direction corresponds to that of the container.

In an embodiment of the present disclosure, the second sensor obtains three-dimensional positional information of the container and determines the positional deviation between the container and the container taking and conveying assembly in the Y-axis direction, i.e., the height deviation. The container taking and conveying assembly moves by a corresponding distance along the support assembly 81 based on the height deviation so that the position of the container taking and conveying assembly in the Y-axis direction corresponds to that of the container.

In an embodiment of the present disclosure, the second sensor obtains three-dimensional positional information of the container and determines the angular deviation between the container and the container taking and conveying assembly in the horizontal plane direction. The angular deviation is an angular deviation between the container and the Z-axis direction. Based on the angular deviation, the container taking and conveying assembly rotates around the Y-axis by the revolving support portion 102 to make the angle consistent with the angle of the container. By adjusting the angle, there may be a positional deviation in the X-axis direction between the container taking and conveying assembly and the container in the X-axis direction. Based on the positional deviation, the support assembly 81 adjusts the position in the X-axis direction so that the container taking and conveying assembly and the container can correspond in angle and position in the horizontal plane direction.

For consideration of safety, the container taking and conveying assembly should move along the X-axis and the Y-axis within a predetermined movement threshold range based on the three-dimensional positional information, and rotate by a corresponding angle within a predetermined rotation threshold range. The predetermined movement threshold is the maximum distance of movement. The predetermined rotation threshold is the maximum angle of rotation. If the distance needing to be moved exceeds the predetermined movement threshold or the angle needing to be rotated exceeds the predetermined rotation threshold, the container taking and conveying assembly stops taking and placing the container and reports an abnormality so as not to collide with the frame of the carrier while taking and placing the container.

When adjusting the position of the container taking and conveying assembly relative to the container based on the second sensor, the order of adjusting the horizontal deviation, the height deviation or the angular deviation can be arbitrarily ordered without limitation here. In a preferred embodiment, the position of the second sensor should be arranged relatively at the center of the container taking and conveying assembly, thus facilitating alignment of the center of the container taking and conveying assembly with the center of the container, which can avoid labeling the container and improve the accuracy of alignment compared with a conventional method.

The first sensor and the second sensor may be two sensors or the same sensor, which is not limited in the present disclosure. The first sensor and the second sensor can be, but are not limited to, a vision sensor, a depth information sensor or a 3D sensor, etc. The person skilled in the art can make a choice based on the prior art, as long as the three-dimensional positional information can be obtained.

### Embodiment III

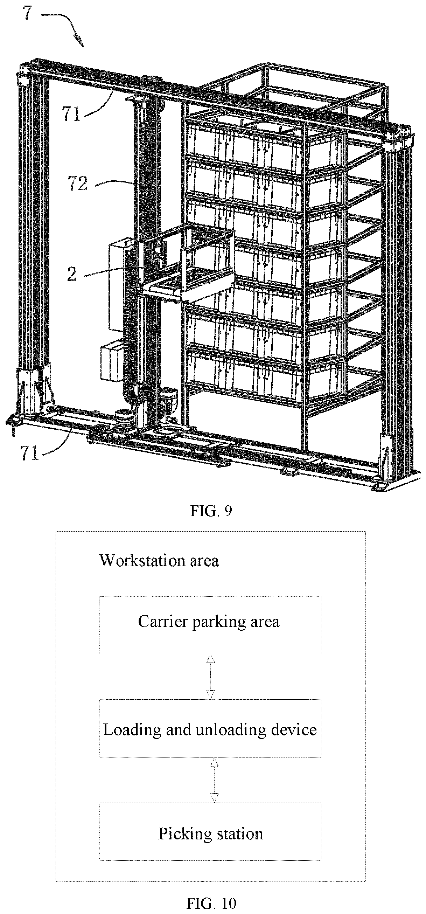

This embodiment provides a container loading and unloading device, as described in FIG. 9. The container loading and unloading device includes a frame 7. The frame 7 is provided with a container taking and conveying assembly disclosed in Embodiment I. The container taking and conveying assembly is configured to move on the frame 7. The position of the container taking and conveying assembly can be adjusted on the frame. For the specific structure and principle of the container taking and conveying assembly, reference may be made to Embodiment I and it will not be repeated in this embodiment.

Specifically, as described in FIG. 9, the frame 7 includes X-axis tracks 71 and a Y-axis track 72 perpendicular to each other, with the X-axis tracks 71 and the Y-axis track 72 arranged on a vertical plane. Specifically, the Y-axis track is configured to move along the X-axis tracks. The container taking and placing assembly is configured to move along the Y-axis track. A moving assembly 4 is configured to drive a taking and placing assembly to move in the Z-axis direction in a first moving trajectory, with the X-axis, the Y-axis and the Z-axis forming a three-dimensional coordinate system.

In an embodiment, the frame 7 includes a gantry assembly. Each of the X-axis tracks 71 includes a ground track structure and an overhead track structure arranged on the gantry assembly. The X-axis tracks 71 extend in the horizontal direction and the Y-axis track 72 extends in the vertical direction. The Y-axis track 72 can be of a stand column structure. Both ends of the Y-axis track 72 are respectively guidably fitted with the ground track structure and the overhead track structure. The Y-axis track 72 moves horizontally along the ground track structure and the overhead track structure.

Specifically, the two X-axis tracks 71 are each provided with an X-axis moving plate. The X-axis moving plate can move in the horizontal direction along the X-axis track 71. Both ends of the Y-axis track 72 are fixedly connected to the two X-axis moving plates respectively. The Y-axis track 72 is provided with a Y-axis moving plate. The Y-axis moving plate can move in the vertical direction along the Y-axis track 72. The container taking and conveying assembly is fixedly connected to the Y-axis moving plate. The X-axis moving plate and the Y-axis moving plate can be further provided with guiding assemblies and slide along the corresponding X-axis tracks 71 and Y-axis track 72 via the guiding assemblies.

The frame 7 is further provided with a drive system. The drive system includes an X-axis drive unit and a Y-axis drive unit. The X-axis drive unit is configured to drive the Y-axis track 72 to move along the X-axis tracks 71, and the Y-axis drive unit is configured to drive the container taking and conveying assembly to move along the Y-axis track 72, thereby moving the container taking and conveying assembly to a corresponding position, for example, corresponding to the target position on the carrier. The drive system may include a drive motor, a transmission gear, a transmission chain, a lead screw assembly, etc., which could be set by a person skilled in the art based on the prior art to achieve the above functions of the drive system.

In an embodiment of the present disclosure, at least two Y-axis tracks 72 can be arranged. The at least two Y-axis tracks 72 move independently of each other between the upper and lower X-axis tracks 71. Each Y-axis track is provided with at least one container taking and conveying assembly. The container taking and conveying assembly on each Y-axis track can move independently, which improves the working efficiency of the container loading and unloading device.

In this embodiment, the container loading and unloading device is configured to transfer a container on the carrier. The container taking and conveying assembly can move along the X-axis tracks 71 and the Y-axis tracks 72 on the frame 7 to the target position of the carrier.

The container taking and conveying assembly has a positioning system 6 for the positional deviation between the container taking and conveying assembly and the target position on the carrier. A two-dimensional imaging module such as a camera, or a three-dimensional imaging module such as a depth camera or a panoramic camera can be selected as the positioning system 6, which is capable of acquiring positional information of the target position.

In an embodiment, a two-dimensional imaging module is selected as the positioning system 6. Each container position of the carrier is correspondingly provided with a two-dimensional identifier. The two-dimensional imaging module is configured to acquire the positional information of the identifier on the carrier. Based on the identifier position obtained by the two-dimensional imaging module, the positional deviation of the container taking and conveying assembly and the identifier can be compared and analyzed, including the deviation in the horizontal direction and vertical direction. Based on the positional deviation from the identifier obtained by the two-dimensional imaging module, the container taking and conveying assembly can be adjusted by the X-axis tracks 71 and the Y-axis tracks 72 to improve the accuracy between the container taking and conveying assembly and the target position.

The X-axis tracks 71 and the Y-axis tracks 72 of the container loading and unloading device are arranged into a frame-shaped structure, which, by fitting with and using the container taking and conveying assembly compact in structure, can be used in a narrow working space to improve the space utilization rate and increase the capacity of the warehousing space.

### Embodiment IV

This embodiment provides a warehousing system which uses containers to store goods and is capable of rapidly transferring and picking the goods in the containers, so as to improve the working efficiency and reduce the human labor.

Referring to FIG. 10, the warehousing system includes a workstation area, and an operating station, a carrier parking area, and the container loading and unloading device provided in Embodiments I and II are arranged in the workstation area. The carrier parking area is used for parking the carrier. The carrier is provided with a plurality of storage positions for placing the containers. The container loading and unloading device can take and place and transfer the container on the carrier, and on the operating station, the goods in the container can be picked. The container loading and unloading device is located between the operating station and the carrier parking area and configured to transfer the container between the operating station and the carrier located in the carrier parking area.

According to a taking and placing instruction, the container taking and conveying assembly of the container loading and unloading device moves in the X-axis and Y-axis directions corresponding to the position of the storage position where a target container is located. Then a taking and placing assembly 3 grabs the container in the Z-axis direction and grabs the container onto a bearing assembly 2. The container loading and unloading device can further transfer the container on the bearing assembly 2 to the operating station. On the operating station, picking the goods in the container is completed. After the picking is completed, the container loading and unloading device can take away the container on the operating station and transfer the container to the target storage position on the carrier for storage.

The operating station can implement any one of the warehousing operations including, but not limited to, at least one of: an off-shelf operation, an on-shelf operation, an inventory operation, and a tallying operation. For example, when the operating station implements a picking off-shelf operation, the operating station may serve as a picking off-shelf station.

In an embodiment, at least two parking stations for parking the carriers are arranged in the carrier parking area. Different carriers can park at the parking stations, so that the warehousing system has a greater storage capacity. The carrier can be arranged to be fixed to the corresponding parking station, and can also be arranged to be able to move to a different parking station, with the use more convenient and flexible.

In an embodiment, at least two container loading and unloading devices are arranged and correspond to different carriers located on different parking stations one to one. The positions of the container loading and unloading device and the carrier are relatively fixed. The different container loading and unloading devices can work independently of each other, with high working efficiency.

In a specific embodiment, the workstation area further includes a conveying line. The conveying line is configured to transport containers. The conveying line includes a conveying line inlet and a conveying line outlet. The conveying line is capable of transporting the container from the conveying line inlet to the conveying line outlet. The operating station is located on a conveying path of the conveying line. During transportation, the container can be conveyed to the operating station so that the picking work can be performed on the container at the operating station. After the picking is completed, the container can be conveyed to the conveying line outlet.

The conveying line inlet and the conveying line outlet are respectively provided with a container loading and unloading device. The container loading and unloading device located at the conveying line inlet is configured to take out the container from the carrier located in the carrier parking area and placing the same on the conveying line. The container loading and unloading device located at the conveying line outlet is configured to take out the container from the conveying line and placing the same on the carrier located in the carrier parking area. The two container loading and unloading devices located at the conveying line inlet and the conveying line outlet can be two different container loading and unloading devices, or the same container loading and unloading device. A belt conveyor, a roller conveyor, a plate chain conveyor, etc. can be selected as the conveying line, which is not limited by the present disclosure.

At the operating station, the picking work can be performed manually or by an intelligent robot. A plurality of operating stations can be arranged. The plurality of operating stations can be arranged on the conveying line to work independently of each other, which can improve the picking efficiency.

When the warehousing system works, the container loading and unloading device located at the conveying line inlet takes away the container at the target position on the carrier according to a container taking instruction, and then conveys the container to the conveying line inlet. The conveying line conveys the container to the operating station. On the operating station, the goods in the container are picked. After the picking is completed, the container is conveyed through the conveying line to the conveying line outlet. The container loading and unloading device located at the conveying line outlet takes away the container at the conveying line outlet according to an instruction and then conveys the container to the target storage position of the carrier.

The warehousing system realizes the initial picking and transportation of the container through the container loading and unloading device, and can transfer the container between the carrier and the operating station area, which effectively improves the efficiency of the sorting work and reduces the human labor.

### Embodiment V

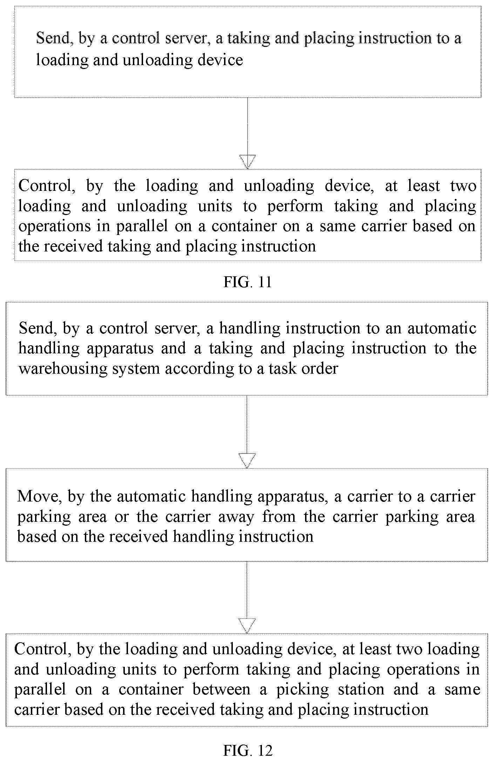

This embodiment provides a container taking and placing method applied to a control server and the container loading and unloading devices provided in Embodiment I and Embodiment II. The control server is capable of controlling the container loading and unloading devices to perform the operation of taking and placing containers. Referring to FIG. 11, the container taking and placing method includes the following steps:
Send, by the control server, a taking and placing instruction to the container loading and unloading device.

Specifically, the taking and placing instruction is an instruction to take away a container on a target storage position on a carrier, or an instruction to place a container on the container loading and unloading device onto a target storage position of a carrier. The container loading and unloading device can drive a container taking and conveying assembly to move to a position corresponding to the target storage position according to the coordinates of the target storage position pre-stored in a system, and then drive the container taking and conveying assembly to move along the Z-axis to take away the container on the target storage position or place the container on the container taking and conveying assembly onto the target storage position.

Control, by the container loading and unloading device, at least two loading and unloading units to perform taking and placing operations in parallel on a container on a same carrier based on the received taking and placing instruction.

Specifically, the container loading and unloading device includes at least two loading and unloading units. The loading and unloading units are controlled independently of each other, and can perform taking and placing operations simultaneously or only some of the loading and unloading units work. The control server can send a taking and placing instruction to the container loading and unloading device to take and place at least two containers at the same time. The container loading and unloading device controls the loading and unloading units to perform taking and placing operations at the same time based on the taking and placing instruction, which can effectively save the working time and improve the working efficiency.

### Embodiment VI

This embodiment provides a container taking and placing method applied to a control server, an automatic handling apparatus, and the warehousing system disclosed in Embodiment IV.

Referring to FIG. 12, the container taking and placing method provided in this embodiment includes the following steps:
Send, by the control server, a handling instruction to the automatic handling apparatus and a taking and placing instruction to the warehousing system according to a task order.

The automatic handling apparatus may be a handling robot for handling carriers. For example, the automatic handling apparatus may jack up the carrier from the bottom of the carrier by means of a lifting device and then convey the carrier. The taking and placing instruction sent by the control server to the warehousing system is an instruction to take away a container on a target storage position on the carrier, or an instruction to place a container on the target storage position on the carrier. The target storage position is located on the carrier handled by the automatic handling apparatus.

Move, by the automatic handling apparatus, the carrier to a carrier parking area or the carrier away from the carrier parking area based on the received handling instruction.

When the taking and placing instruction is an instruction to take away a container, the automatic handling apparatus moves the carrier to the carrier parking area in a workstation area so that the carrier corresponds to the container loading and unloading device in position. Then the container loading and unloading device is able to take away the container at the target storage position on the carrier.

When the taking and placing instruction is an instruction to place a container, the carrier places the container on the carrier in the carrier parking area. Then the automatic handling device moves away the carrier in the carrier parking area and vacates the carrier parking area.

Control, by the container loading and unloading device, at least two loading and unloading units to perform taking and placing operations in parallel on the container between an operating station and a same carrier based on the received taking and placing instruction.

The container loading and unloading device can transfer the container between the operating station and the carrier. When the taking and placing instruction is an instruction to take away a container, the container loading and unloading device controls at least two loading and unloading units to transfer the container on the carrier to the operating station. When the taking and placing instruction is an instruction to place a container, the container loading and unloading device controls the loading and unloading unit to convey the container on the operating station to the carrier.

In the container taking and placing method of this embodiment, the initial picking and transportation of the container is realized by the control server, the automatic handling apparatus and the warehousing system, which effectively improves the efficiency of the sorting work and reduces the human labor.

### Embodiment VII

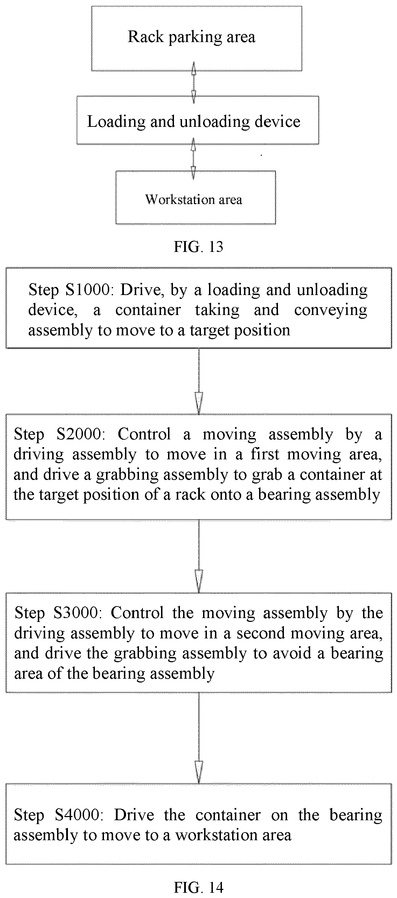

This embodiment provides a picking system, as described in FIG. 13, including a workstation area, a carrier parking area, and the container loading and unloading device disclosed in Embodiment III. The specific structure and principle of the container loading and unloading device will not be repeated in this embodiment.

The carrier parking area is configured for parking the carrier. The container loading and unloading device is configured to transfer containers between the workstation area and the carrier. An operating station is arranged in the workstation area. On the operating station, the goods in the container can be sorted.

In an embodiment of the present disclosure, the workstation area may further include a conveying line. The conveying line can transport containers. The conveying line is configured to receive containers transferred from a container taking and conveying assembly. Staff located at the operating station are able to pick the containers on the conveying line. Alternatively, the conveying line is configured to convey the containers located on the conveying line to the container taking and conveying assembly. The containers conveyed to the container taking and conveying assembly are the picked containers.

The container loading and unloading device is capable of loading a container at a target position on the carrier according to an order, and then conveying the target container onto the conveying line in the workstation area. The staff at the operating station are capable of picking the goods in the container on the conveying line according to the order. After the picking is completed, the container is conveyed through the conveying line onto the container loading and unloading device, and an unloading device is able to put the container back onto the carrier. The picking system realizes the initial picking and transportation of the container through the container loading and unloading device, and can transfer the container between the carrier and the workstation area, which effectively improves the efficiency of the sorting work and reduces the human labor.

### Embodiment VIII

This embodiment discloses a container taking method, implemented by the picking system disclosed in Embodiment III, as described in FIG. 14, including the following steps:
Step S1000: Drive, by a container loading and unloading device, a container taking and conveying assembly to move to a target position.

An operation system issues an instruction to take a container to the container loading and unloading device. The container loading and unloading device receives the operation instruction and then drives the container taking and conveying assembly to move to the target position based on container positional information contained in the operation instruction. For example, the container positional information can be pre-stored in the operation system or in a control system of the container loading and unloading device in the form of coordinates. The container loading and unloading device can make corresponding operations based on the positional information.

In combination with the structure of the container loading and unloading device in the present disclosure, the container loading and unloading device includes an X-axis track 71 arranged in the horizontal direction and a Y-axis track 72 arranged in the vertical direction. The container loading and unloading device, after receiving the operation instruction, drives the container taking and conveying assembly to move to the target position through the movement in the X-axis direction and the Y-axis direction. The target position corresponds to a target container position contained in the operation instruction.

In an embodiment of the present disclosure, step S 1000 includes the following steps:
Step S1100: Drive, by the container loading and unloading device, the container taking and conveying assembly to move to the target position in accordance with the pre-stored coordinates in the system.

Each container position on a carrier can be pre-stored in the system in the form of coordinates (x, y). An unloading device, after receiving the corresponding instruction, can control the X-axis track 71 and the Y-axis track 72 to move by the corresponding distance according to the coordinate information of the target position contained in the instruction so as to drive the container taking and conveying assembly to the corresponding coordinate position and reach the target position.

Step S 1200: Acquire, through a positioning system, positional information of an identifier on the carrier, and adjust, by the container loading and unloading device, the position of the container taking and conveying assembly based on the obtained positional deviation.

The corresponding position of each container position on the carrier is provided with the identifier. When the container taking and conveying assembly moves to the target position of the carrier, the positioning system can identify the identifier of the target position of the carrier and obtain the positional deviation between the target position and the container taking and conveying assembly. The container loading and unloading device can adjust the position of the container taking and conveying assembly in the X-axis and Y-axis directions based on the obtained position deviation to improve the accuracy of the position of the container taking and conveying assembly.

In an embodiment of the present disclosure, the container loading and unloading device drives the container taking and conveying assembly to move until the bearing surface of a bearing assembly thereof is lower than the bearing surface on the container position of the carrier used for bearing the container, which facilitates that the taking and placing assembly drags the container located on the carrier onto the bearing assembly.

Step S2000: Control a moving assembly 4 by a driving assembly 5 to move in a first moving trajectory, and drive a taking and placing assembly 3 to load the container at the target position of the carrier onto the bearing assembly 2.

The driving assembly drives the taking and placing assembly 3 to move in the first moving trajectory through the moving assembly, so that the taking and placing assembly stretches out in the extension direction of the bearing assembly 2 in an accommodating space of the bearing assembly 2 until the taking and placing assembly adsorbs the container in front. The reverse movement of the moving assembly drives the taking and placing assembly to convey the container onto the bearing assembly 2.

In a specific embodiment of the present disclosure, step S2000 includes the following steps:
Step S210: Control the moving assembly by the driving assembly to move in the first moving trajectory to a first position, and drive the taking and placing assembly to stretch out and load the container at the target position on the carrier.

When located at the first position, the taking and placing assembly can be mated to the container at the target position on the carrier to load the container. When the taking and placing assembly 3 moves to the first position, the taking and placing assembly 2 stretches out of a first open end of the bearing assembly 2, stretches to the container on the target position of the carrier and fits with the end face of the container so as to load the container. For example, when a suction cup mechanism is used as the taking and placing assembly 3, the suction cup mechanism fits with the end face of the container at the position, thereby adsorbing the container.

Step S220: Control the moving assembly by the driving assembly to move to a second position in the first moving trajectory, and move, by the taking and placing assembly, the loaded container to the accommodating space of the bearing assembly.

When located at the second position, the taking and placing assembly places the container on the bearing assembly. For example, when the taking and placing assembly is a suction cup mechanism, at the second position, a vacuum source of the suction cup mechanism is cut off, so that the container is supported on the bearing assembly.

The second position can be arranged at the position where the first moving trajectory and the second moving trajectory are connected, or at the position in the first moving trajectory adjacent to the position where the first moving trajectory is connected to the second moving trajectory. When the taking and placing assembly adsorbs the container to move from the first position to the second position, the container is moved in the direction of the accommodating space of the bearing assembly so that the container is fully or partially located on the bearing assembly.

Step S2300: When a detection device detects that the container reaches the second position, release the container by the taking and placing assembly, and support the container on the bearing assembly.

When the container moves to the second position, the container can be detected by the detection device. At this moment, the taking and placing assembly can unload the container onto the bearing assembly. In an embodiment in which the bearing assembly includes a conveying belt, the conveying belt is able to move the container fully into the accommodating space of the bearing assembly during operation.

In an embodiment in which the taking and placing assembly includes a suction cup mechanism, when the container is moved to the second position, the detection device sends out a detection signal indicating that the container is in place, thereby a vacuum source of the suction cup mechanism can be cut off and the suction cup mechanism loads the container on the conveying belt.

Step S3000: Control the moving assembly 4 by the driving assembly to move in the second moving trajectory, and drive the taking and placing assembly to avoid the accommodating space of the bearing assembly.

A sliding mechanism of the moving assembly 4 drives the taking and placing assembly 3 to move downwardly to the second moving trajectory, and drives the taking and placing assembly 3 to move to a position lower than the bearing surface of the bearing assembly 2, thereby avoiding the accommodating space of the bearing assembly. At this moment, the bearing assembly 2 can convey the container into the accommodating space.

In an embodiment, in step S3000, the moving assembly is controlled by the driving assembly to move in the second moving trajectory to a third position. The taking and placing assembly moves to a position below the bearing assembly to avoid the accommodating space of the bearing assembly.

The third position is located on the second moving trajectory. The taking and placing assembly moves to the position below the bearing assembly to avoid the accommodating space, so that the container cannot interfere with the taking and placing assembly when moving along the bearing assembly 2 to the accommodating space or passing through the accommodating space. Thus, the space for the container taking and conveying assembly is saved and the structure is more compact.

Step S4000: Drive the container on the bearing assembly 2 to move to a workstation area.

After the container is moved onto the bearing assembly 2, the X-axis track 71 and the Y-axis track 72 of the container loading and unloading device drive the container taking and conveying assembly to move from the target position to correspond to a corresponding position in the workstation area, for example, corresponding to the conveying line of a workstation. The conveying belt continues to convey the container, thereby transferring the container onto the conveying line of the workstation so that the container can be picked at an operating station in the workstation area. The container loading and unloading device achieves automatic transfer of the container, saving the labor cost and improving the work efficiency.

### Embodiment IX

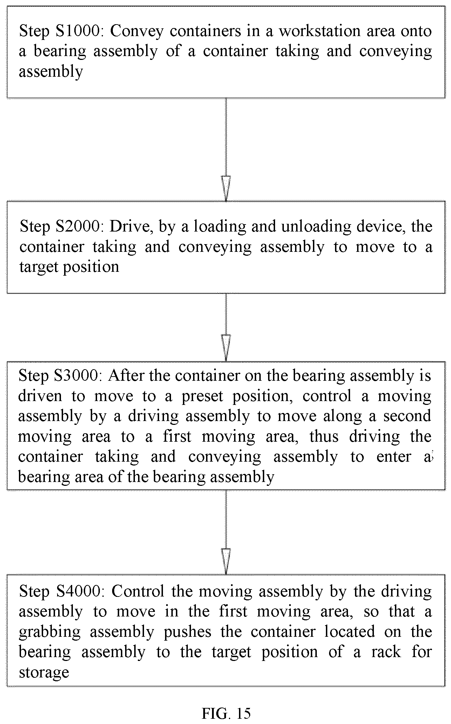

This embodiment discloses a container conveying method, implemented by the picking system disclosed in Embodiment III, as described in FIG. 15, including the following steps:
Step S1000: Convey containers in a workstation area onto a bearing assembly of a container taking and conveying assembly.

When the containers that have been picked in the workstation area need to be conveyed back to carriers, and the containers are conveyed to the bearing assembly of the container taking and conveying assembly, at this moment, a taking and placing assembly is located in a second moving trajectory, i.e., the taking and placing assembly is located outside an accommodating space of the bearing assembly, then the container located in the workstation area can be conveyed onto the bearing assembly of the container taking and conveying assembly.

For example, the container may be conveyed on a conveying line in the workstation area and pass through a second open end of the container taking and conveying assembly to enter the accommodating space of the bearing assembly, and finally the container is supported on the bearing assembly.

Step S2000: Drive, by a container loading and unloading device, the container taking and conveying assembly to move to a target position.

The container loading and unloading device can drive the container taking and conveying assembly to move to the target position by an X-axis track 71 and a Y-axis track 72. The method of this step is the same as that of the movement method described above and will not be specified here.

In an embodiment of the present disclosure, the container loading and unloading device drives the container taking and conveying assembly to move until the bearing surface of the bearing assembly thereof is higher than the bearing surface on a container position of the carrier used for bearing the container, which facilitates that the taking and placing assembly pushes the container located on the bearing assembly onto the container position of the carrier for storage.

Step S3000: After the container on the bearing assembly is driven to move to a preset position, control a moving assembly by a driving assembly to move along the second moving trajectory to a first moving trajectory, thus driving the container taking and conveying assembly to enter the accommodating space of the bearing assembly.

After reaching the target position, the bearing assembly can be easily driven to move to the preset position. The preset position can be the second position as described above. Certainly, for those skilled in the art, this step can also be performed before the container taking and conveying assembly moves, and is not limited here.

In an embodiment in which the bearing assembly is a conveying belt, the container may be conveyed by the conveying belt. When the container is moved to the second position as described above, the moving assembly is controlled to move along the second moving trajectory to the first moving trajectory, thereby driving the taking and placing assembly to enter the accommodating space of the bearing assembly.

Step S4000: Control the moving assembly by the driving assembly to move in the first moving trajectory, so that the taking and placing assembly pushes the container located on the bearing assembly to the target position of the carrier for storage.

Under the driving force of the driving assembly, the taking and placing assembly is able to push the container located at the second position on the bearing assembly along the first moving trajectory, thereby pushing the container toward the first open end and pushing the container through the first open end onto the target position of the carrier for storage, completing the step of feeding the container on the carrier.

The container loading and unloading device is able to complete the work of both taking the container and conveying the container in the picking system, improving the utilization rate and working efficiency of the apparatus, reducing the human labor, effectively reducing the production cost and having outstanding superiority.

The embodiments of the present disclosure have been described above. The above description is illustrative, rather than exhaustive, and is not limited to the disclosed various embodiments. Numerous modifications and alterations are apparent to persons of ordinary skill in the art without departing from the scope and spirit of the illustrated embodiments. The selection of terms as used herein is intended to best explain the principles and practical applications of the various embodiments or the technical improvements to technologies on the market, or to enable other persons of ordinary skill in the art to understand the various embodiments disclosed herein. The scope of the present disclosure is limited by the appended claims.

## Claims

1. A container loading and unloading device, comprising at least two loading and unloading units arranged in a horizontal X-axis direction in a spaced manner, each loading and unloading unit comprising:
a support assembly, the support assembly extending in a vertical Y-axis direction; and
at least one container taking and conveying assembly, the container taking and conveying assembly being controlled by a driving assembly to move along the support assembly in the Y-axis direction,
wherein the container taking and conveying assembly comprises a taking and placing assembly and a bearing assembly, the taking and placing assembly being configured to move in a Z-axis direction to take out a container from a carrier and load the same onto the bearing assembly, or unload the container from the bearing assembly and place the same on the carrier; the carrier is provided with at least two rows and at least two columns of container storage units on a plane where an X-axis and a Y-axis are located, one container storage unit comprises at least one storage position in the Z-axis direction, and one storage position is configured to accommodate at least one container; and
the at least two loading and unloading units are configured to load and unload the container on a same carrier.

2. The container loading and unloading device according to claim 1, wherein a number of the loading and unloading units corresponds to a number of columns of the container storage units on the same carrier one to one, and different loading and unloading units correspond to different columns of the same carrier.

3. The container loading and unloading device according to claim 1, wherein the loading and unloading unit is configured to move in the X-axis direction, and the same loading and unloading unit corresponds to different columns of the same carrier.

4. The container loading and unloading device according to claim 1, wherein the support assembly comprises a stand column, the stand column is provided with a sliding track, the container taking and conveying assembly is slidably fitted with the stand column by means of the sliding track.

5. The container loading and unloading device according to claim 1, wherein each loading and unloading unit is independently controlled.

6. The container loading and unloading device according to claim 1, further comprising a gantry assembly, one end of the support assembly being connected to a top of the gantry assembly and the other end of the support assembly being connected to a bottom of the gantry assembly, or connected to other supporting surfaces.

7. The container loading and unloading device according to any one of claims 1 to 6, wherein the container taking and conveying assembly takes and places the container by at least one of sucking, pushing, clamping, grabbing, hooking, holding, and lifting.

8. The container loading and unloading device according to any one of claims 1 to 6, wherein
the bearing assembly is configured to bear the container; an accommodating space for accommodating the container is formed in the bearing assembly;
the taking and placing assembly is configured to take out the container from a first target position and load the same onto the bearing assembly, or to unload the container from the bearing assembly and place the same at a second target position;
a moving assembly is further provided, the moving assembly being configured to drive the taking and placing assembly to move in a first moving trajectory and a second moving trajectory;
in the first moving trajectory, the moving assembly is configured to drive the taking and placing assembly to move in the accommodating space of the bearing assembly to load and unload the container;
in the second moving trajectory, the moving assembly is configured to drive the taking and placing assembly to leave the accommodating space of the bearing assembly to make the container enter the accommodating space and be borne on the bearing assembly.

9. The container loading and unloading device according to claim 8, wherein the moving assembly comprises a guiding mechanism and a sliding mechanism, the guiding mechanism comprises a first guiding portion and a second guiding portion communicated together; the sliding mechanism is configured to move along the first guiding portion and the second guiding portion;
the first guiding portion and the second guiding portion define the first moving trajectory and the second moving trajectory of the sliding mechanism, respectively.

10. The container loading and unloading device according to claim 9, wherein the first guiding portion is configured to linearly extend in a horizontal direction, and the second guiding portion is in a different direction from the first guiding portion;
the sliding mechanism is configured so that when the sliding mechanism moves along the first guiding portion, the taking and placing assembly moves in a linear direction in the accommodating space of the bearing assembly; and
the sliding mechanism is configured so that after the sliding mechanism moves along the first guiding portion to the second guiding portion, the taking and placing assembly moves in a manner of gradually leaving the accommodating space of the bearing assembly.

11. The container loading and unloading device according to claim 9, wherein the second guiding portion is configured to be located below the first guiding portion; and the moving assembly is configured so that after the moving assembly moves in place along the second guiding portion, the taking and placing assembly is configured to move to a position below the bearing assembly to avoid the accommodating space of the bearing assembly.

12. The container loading and unloading device according to claim 11, wherein the first guiding portion and the second guiding portion are located in a same plane; and the sliding mechanism comprises:
a fixed portion, the fixed portion being controlled by the driving assembly to move linearly in a direction parallel to a plane in which the first guiding portion and the second guiding portion are located; and
a sliding portion, the sliding portion being slidably fitted with the fixed portion; and the sliding portion being guidably fitted in the first guiding portion and the second guiding portion;
the taking and placing assembly being arranged on the sliding portion.

13. The container loading and unloading device according to claim 8, wherein the taking and placing assembly comprises a suction cup mechanism, and the suction cup mechanism is configured to be fitted with an end face of the container.

14. The container loading and unloading device according to claim 8, wherein the container taking and conveying assembly comprises a first open end and a second open end; and the bearing assembly is a conveying belt, and the conveying belt is configured to drive the container to move to the first open end or the second open end of the container taking and conveying assembly.

15. The container loading and unloading device according to claim 1, further comprising a limiting mechanism, the limiting mechanism being configured to limit both sides of the container located on the bearing assembly.

16. The container loading and unloading device according to claim 15, wherein the limiting mechanism comprises a first limiting portion and a second limiting portion arranged in a spaced manner; and the first limiting portion and the second limiting portion are configured to move towards or away from each other relative to the bearing assembly in the X-axis direction to adjust a distance between the first limiting portion and the second limiting portion.

17. The container loading and unloading device according to claim 16, comprising a first base, the first limiting portion and the second limiting portion being slidably fitted on the first base, and further comprising a transmission mechanism for driving the first limiting portion and the second limiting portion to move in the X-axis direction on the first base.

18. The container loading and unloading device according to claim 17, wherein the transmission mechanism comprises a transmission belt controlled by a belt pulley and extending in the X-axis direction, and the first limiting portion and the second limiting portion are connected to both spaced sides of the transmission belt, respectively.

19. The container loading and unloading device according to any one of claims 15 to 18, wherein the limiting mechanism is arranged at a position above the bearing assembly and is configured to limit an upper region of the container.

20. The container loading and unloading device according to claim 1, further comprising a rotating mechanism, the rotating mechanism being configured to drive the taking and placing assembly and the bearing assembly to rotate around the Y-axis.

21. The container loading and unloading device according to claim 20, wherein the rotating mechanism comprises a second base, and a revolving support portion rotatably connected to the second base, and the bearing assembly and the taking and placing assembly are relatively connected to the revolving support portion.

22. The container loading and unloading device according to claim 1, comprising a first sensor, the first sensor being configured to determine whether the container is present at the storage position of the carrier when the container taking and conveying assembly is to take out the container from the carrier and/or determine whether the storage position of the carrier is empty when the container taking and conveying assembly is to place the container to the storage position of the carrier.

23. The container loading and unloading device according to claim 22, comprising a second sensor, the second sensor being configured to determine a pose deviation between the container taking and conveying assembly and the container on the carrier.

24. The container loading and unloading device according to claim 23, wherein the container loading and unloading device is further configured to adjust a pose thereof based on the pose deviation between the container loading and unloading device and the corresponding container as determined by the second sensor, to eliminate the pose deviation.

25. The container loading and unloading device according to claim 23, wherein the first sensor and the second sensor are the same sensor.

26. The container loading and unloading device according to claim 23, wherein the first sensor and the second sensor are a vision sensor, a depth information sensor or a 3D sensor.

27. A warehousing system, comprising: a workstation area, and an operating station, a carrier parking area, and a container loading and unloading device according to any one of claims 1 to 24 being arranged in the workstation area;
the carrier parking area being configured to park the carrier;
the container loading and unloading device being located between the operating station and the carrier parking area and configured to transfer the container between the operating station and the carrier located in the carrier parking area.

28. The warehousing system according to claim 27, wherein at least two parking stations for parking
the carriers are arranged in the carrier parking area.

29. The warehousing system according to claim 28, wherein at least two container loading and unloading devices are provided and correspond to different carriers located on different parking stations one to one.

30. The warehousing system according to claim 27, wherein the workstation area further comprises a conveying line, the conveying line comprises a conveying line inlet and a conveying line outlet, and the operating station is located on a conveying path of the conveying line; the conveying line inlet and the conveying line outlet are respectively provided with the container loading and unloading device;
the container loading and unloading device located at the conveying line inlet is configured to take out the container from the carrier located in the carrier parking area and place the same on the conveying line; and
the container loading and unloading device located at the conveying line outlet is configured to take out the container from the conveying line and place the same on the carrier located in the carrier parking area.

31. A container taking and placing method, being applied to a control server and a container loading and unloading device according to any one of claims 1 to 24, comprising:
sending, by the control server, a taking and placing instruction to the container loading and unloading device; and
controlling, by the container loading and unloading device, at least two loading and unloading units to perform taking and placing operations in parallel on a container on a same carrier based on the received taking and placing instruction.

32. A container taking and placing method, being applied to a control server, an automatic handling apparatus, and a warehousing system according to any one of claims 25 to 28, comprising:
sending, by the control server, a handling instruction to the automatic handling apparatus and a taking and placing instruction to the warehousing system according to a task order;
moving, by the automatic handling apparatus, a carrier to a carrier parking area or the carrier away from the carrier parking area based on the received handling instruction; and
controlling, by the container loading and unloading device, at least two loading and unloading units to perform taking and placing operations in parallel on the container between an operating station and a same carrier based on the received taking and placing instruction.
